# EUROPEAN PATENT SPECIFICATION

(11) **EP 4 130 131 B1**
(45) Date of publication and mention of the grant of the patent: **09.07.2025**
(21) Application number: 21775645.1
(22) Date of filing: 04.03.2021
(51) Int. Cl.: C08K 5/405, C08L 33/04, C09K 3/10, C08K 5/46

(54) **ACRYLIC RUBBER COMPOSITION AND RUBBER CROSSLINKED PRODUCT**
ACRYLKAUTSCHUKZUSAMMENSETZUNG UND MIT KAUTSCHUK VERNETZTES PRODUKT
COMPOSITION DE CAOUTCHOUC ACRYLIQUE ET PRODUIT RÉTICULÉ EN CAOUTCHOUC

(30) Priority: 25.03.2020 JP 2020054330
(43) Date of publication of application: 08.02.2023
(73) Proprietor: Zeon Corporation, Tokyo 100-8246 (JP)
(72) Inventor: ONOE, Masahiro, Tokyo 100-8246 (JP); DO, Hanh Dung, Tokyo 100-8246 (JP)
(74) Representative: Maiwald GmbH
(86) International application number: PCT/JP2021/008487
(87) International publication number: WO 2021/192897

(56) References cited:
- EP-A1- 1 559 538
- DE-A1- 2 716 897
- JP-A- 2004 059 821
- JP-A- 2011 032 390
- JP-A- H04 312 568
- JP-A- H07 157 600
- JP-A- S51 101 054
- JP-A- S63 241 047
- JP-B1- S4 739 209

## Description

### TECHNICAL FIELD

The present invention relates to an acrylic rubber composition, and specifically relates to an acrylic rubber composition of which thermal degradation is effectively prevented, and a cross-linked rubber prepared by cross-linking such an acrylic rubber composition.

### BACKGROUND ART

Accompanied by development of petrochemistry, polymers formed of organic compounds have contributed to human development in a variety of forms such as plastics, rubbers, fibers, and films. Because these are used under a variety of environments according to their applications, these have been improved to stand long-term use by imparting durabilities under presumed environments. Products have been developed, for example, by imparting ultraviolet light resistance to plastics for outdoor use and cold resistance to rubbers which function even in extremely cold places.

On the other hand, internal combustion engines, typically engines, which have been increasingly used along with industrial development, need lubricant oil and generate a large amount of heat. Thus, polymers used therein should have resistance against oil and high temperature. In particular, polymers used around engines of vehicles should have properties such that these can maintain flexibility for a long time even after exposed to oil and/or high temperature and do not develop defects such as cracks. To meet such demands, a variety of oil- and heat-resistant rubbers have been developed. Among these, acrylic rubbers are polymers having rubber elasticity and having high oil resistance, high heat-resistant properties, and high flexibility, and have been widely used as members such as seals, gaskets, packings, and hoses around engines of vehicles. Their oil resistance and heat resistance have been further enhanced by selecting a cross-linked structure, an antioxidant, and a compounding agent according to required properties.

For example, Patent Document 1 discloses an acrylic rubber composition comprising an acrylic rubber, trithiocyanuric acid, a dithiocarbamic acid compound, a thiourea derivative, a white filler, and an organosilane compound having a halogen atom or a (meth)acryloxy group. The technique disclosed in Patent Document 1 provides an acrylic rubber composition having high storage stability while the acrylic rubber composition may be thermally degraded under a high temperature environment, leading to a demand for prevention of such thermal degradation.

Patent Document 2 discloses a rubber composition comprising an epoxy group-containing acrylic rubber, specific carbon black, and a vulcanizing agent. The technique disclosed in Patent Document 2 provides a rubber composition which has high heat resistance, exhibits small compression set under a high heat condition, and is suitable for extrusion processing for articles having large diameters, while further prevention of thermal degradation by heat under a high temperature environment (for example, under an environment at 190°C or more) has been demanded.

EP1559538A1 discloses thermal-resistant acrylic rubbers comprising, among others, a thiourea derivative such as N,N'-diphenylthiourea and a phenothiazine.

### RELATED ART DOCUMENTS

### PATENT DOCUMENTS

Patent Document 1: Japanese Patent Application Laid-Open No. 2004-059821
Patent Document 2: Japanese Patent Application Laid-Open No. 2002-121352

### SUMMARY OF THE INVENTION

### PROBLEM TO BE SOLVED BY THE INVENTION

The present invention has been made in consideration of such circumstances. An object of the present invention is to provide an acrylic rubber composition of which thermal degradation is effectively prevented even under a high temperature environment (for example, under an environment at 190°C or more).

### MEANS FOR SOLVING PROBLEMS

The present inventor, who has conducted extensive research to achieve the above object, has found that the above object can be solved by an acrylic rubber composition prepared by compounding an acrylic rubber with a specific thiourea compound, and has completed the present invention.

Specifically, the present invention provides an acrylic rubber composition comprising an acrylic rubber and a compound represented by General Formula (1): 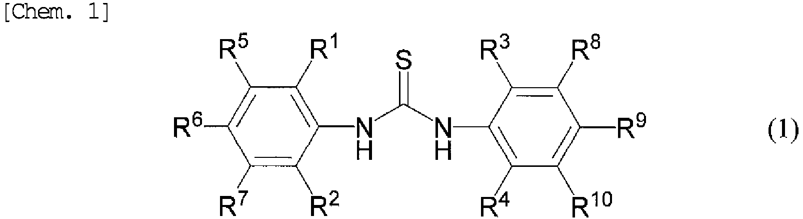 where R¹ to R⁴ each independently represent a C₁ to C₃₀ organic group which may have a substituent, and R⁵ to R¹⁰ each independently represent a hydrogen atom or a C₁ to C₃₀ organic group which may have a substituent.

In the acrylic rubber composition according to the present invention, it is preferred that R¹ to R⁴ in the compound represented by General Formula (1) each independently represent a C₁ to C₃₀ aliphatic hydrocarbon, a C₁ to C₃₀ aromatic heterocyclic group, or a C₆ to C₃₀ aromatic hydrocarbon group which may have a substituent, and it is more preferred that R¹ to R⁴ each independently represent a linear, branched, or cyclic C₁ to C₃₀ alkyl group which may have a substituent.

In the acrylic rubber composition according to the present invention, the content of the compound represented by General Formula (1) is preferably 0.1 to 50 parts by weight, more preferably 1 to 10 parts by weight relative to 100 parts by weight of the acrylic rubber.

In the acrylic rubber composition according to the present invention, the acrylic rubber is preferably a carboxyl group-containing acrylic rubber, an epoxy group-containing acrylic rubber, a halogen atom-containing acrylic rubber, or an acrylic rubber containing a carboxyl group and a halogen atom.

In the acrylic rubber composition according to the present invention, the acrylic rubber preferably comprises 0.1 to 100% by weight of an ethylene-acrylate rubber.

Preferably, the acrylic rubber composition according to the present invention further comprises an antioxidant other than the compound represented by General Formula (1) relative to 100 parts by weight of the acrylic rubber, wherein the total content of the compound represented by General Formula (1) and the antioxidant is 0.1 to 50 parts by weight.

Preferably, the acrylic rubber composition according to the present invention further comprises 0.05 to 20 parts by weight of a cross-linking agent relative to 100 parts by weight of the acrylic rubber.

Moreover, the present invention provides a cross-linked rubber prepared by cross-linking the acrylic rubber composition.

The cross-linked rubber according to the present invention is preferably an extrusion molded article or a seal member.

### EFFECTS OF INVENTION

The present invention can provide an acrylic rubber composition of which thermal degradation is effectively prevented even under a high temperature environment (for example, under an environment at 190°C or more), and a cross-linked rubber prepared by cross-linking such an acrylic rubber composition.

### DESCRIPTION OF EMBODIMENTS

The acrylic rubber composition according to the present invention comprises an acrylic rubber and a compound represented by General Formula (1) described later.

### <Acrylic rubber>

The acrylic rubber used in the present invention may be any acrylic rubber containing units of a (meth)acrylic acid ester monomer [meaning acrylic acid ester monomer and/or methacrylic acid ester monomer. Hereinafter, the same applies to methyl (meth)acrylate and the like.] as the main component (referring to the component occupying 50% by weight or more of the total monomer units in the acrylic rubber in the present invention) in the molecule, and is not particularly limited.

Any (meth)acrylic acid ester monomer can form the (meth)acrylic acid ester monomer units as the main component of the acrylic rubber used in the present invention without limitation. Examples thereof include alkyl (meth)acrylate monomers, alkoxyalkyl (meth)acrylate monomers, and the like.

Any alkyl (meth)acrylate monomers can be used without limitation. Preferred are esters of C₁ to C₈ alkanols and (meth)acrylic acid. Specifically, examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these, preferred are ethyl (meth)acrylate and n-butyl (meth)acrylate, and particularly preferred is ethyl acrylate. These may be used alone or in combination.

Any alkoxyalkyl (meth)acrylate monomers can be used without limitation. Preferred are esters of C₂ to C₈ alkoxyalkyl alcohols and (meth)acrylic acid. Specifically, examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these, preferred are 2-ethoxyethyl (meth)acrylate and 2-methoxyethyl (meth)acrylate, and particularly preferred are 2-ethoxyethyl acrylate and 2-methoxyethyl acrylate. These may be used alone or in combination.

The content of (meth)acrylic acid ester monomer units in the acrylic rubber used in the present invention is 50 to 100% by weight, preferably 50 to 99.9% by weight, more preferably 60 to 99.5% by weight, still more preferably 70 to 99.5% by weight, particularly preferably 70 to 99% by weight. By controlling of the content of the (meth)acrylic acid ester monomer units within these ranges above, the resulting cross-linked rubber can have improved weatherability, heat resistance, and oil resistance.

In the present invention, the (meth)acrylic acid ester monomer units preferably comprise 30 to 100% by weight of alkyl (meth)acrylate monomer units and 70 to 0% by weight of alkoxyalkyl (meth)acrylate monomer units.

The acrylic rubber used in the present invention may contain cross-linkable monomer units in addition to the (meth)acrylic acid ester monomer units.

Any cross-linkable monomer can form cross-linkable monomer units without limitation. Examples thereof include α,β-ethylenically unsaturated carboxylic acid monomers; monomers having an epoxy group; monomers having a halogen atom; diene monomers; and the like. These cross-linkable monomers can be used alone or in combination.

Examples of α,β-ethylenically unsaturated carboxylic acid monomers include, but should not be limited to, C₃ to C₁₂ α,β-ethylenically unsaturated monocarboxylic acids, C₄ to C₁₂ α,β-ethylenically unsaturated dicarboxylic acids, monoesters of C₄ to C₁₂ α,β-ethylenically unsaturated dicarboxylic acids with C₁ to C₈ alkanols, and the like.

Specific examples of C₃ to C₁₂ α,β-ethylenically unsaturated monocarboxylic acids include acrylic acid, methacrylic acid, α-ethylacrylic acid, crotonic acid, cinnamic acid, and the like.

Specific examples of C₄ to C₁₂ α,β-ethylenically unsaturated dicarboxylic acids include butenedioic acids such as fumaric acid and maleic acid; itaconic acid; citraconic acid; chloromaleic acid; and the like.

Specific examples of monoesters of C₄ to C₁₂ α,β-ethylenically unsaturated dicarboxylic acids with C₁ to C₈ alkanols include linear mono-alkyl esters of butenedioic acids, such as monomethyl fumarate, monoethyl fumarate, mono-n-butyl fumarate, monomethyl maleate, monoethyl maleate, and mono-n-butyl maleate; butenedioic acid monoesters having an alicyclic structure, such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these, preferred are linear mono-alkyl esters of butenedioic acids or butenedioic acid monoesters having an alicyclic structure, more preferred are mono-n-butyl fumarate, mono-n-butyl maleate, monocyclohexyl fumarate, and monocyclohexyl maleate, and still more preferred is monocyclohexyl maleate. These α,β-ethylenically unsaturated carboxylic acid monomers can be used alone or in combination. Among these monomers, the dicarboxylic acids include those present in the form of anhydrides thereof.

In the present invention, when the α,β-ethylenically unsaturated carboxylic acid monomer is used as the cross-linkable monomer, the resulting acrylic rubber can be a carboxyl group-containing acrylic rubber. When the acrylic rubber is a carboxyl group-containing acrylic rubber, the resulting acrylic cross-linked rubber can have further improved heat aging resistance.

When the acrylic rubber used in the present invention is a carboxyl group-containing acrylic rubber, the content of units of the α,β-ethylenically unsaturated carboxylic acid monomer is preferably 0.1 to 10% by weight, more preferably 0.5 to 7% by weight, still more preferably 1 to 5% by weight. The content of units of the α,β-ethylenically unsaturated carboxylic acid monomer within these ranges above results in a cross-linked rubber having a better balance between strength and elongation. In particular, by controlling the content of units of the α,β-ethylenically unsaturated carboxylic acid monomer to not less than the lower limit described above, cross-linking can be sufficiently performed, and the resulting cross-linked rubber can easily maintain the shape. In contrast, by controlling the content of units of the α,β-ethylenically unsaturated carboxylic acid monomer to not more than the upper limit described above, the resulting cross-linked rubber can have an increased elongation and a reduced compression set.

When the acrylic rubber used in the present invention is a carboxyl group-containing acrylic rubber, the content of carboxyl groups, namely, the molar amount (ephr) of carboxyl groups per 100 g of the acrylic rubber is preferably 4 × 10⁻⁴ to 4 × 10⁻¹ (ephr), more preferably 1 × 10⁻³ to 2 × 10⁻¹ (ephr), still more preferably 5 × 10⁻³ to 1 × 10⁻¹ (ephr). By controlling the content of carboxyl groups to not less than the lower limit described above, cross-linking can be sufficiently performed, the resulting cross-linked rubber can have improved mechanical properties, and the resulting molded article can have a smooth surface. In contrast, by controlling the content of carboxyl groups to not more than the upper limit described above, the resulting cross-linked rubber can have an increased elongation and a reduced compression set.

Examples of monomers having an epoxy group include, but should not be limited to, epoxy group-containing (meth)acrylic acid esters, epoxy group-containing ethers, and the like.

Specific examples of epoxy group-containing (meth)acrylic acid esters include glycidyl (meth)acrylate and the like.

Specific examples of epoxy group-containing ethers include allyl glycidyl ether, vinyl glycidyl ether, and the like. Among these, preferred are glycidyl methacrylate and allyl glycidyl ether. These monomers having an epoxy group can be used alone or in combination.

In the present invention, when the monomer having an epoxy group is used as the cross-linkable monomer, the resulting acrylic rubber can be an epoxy group-containing acrylic rubber.

When the acrylic rubber used in the present invention is an epoxy group-containing acrylic rubber, the content of units of the monomer having an epoxy group is preferably 0.1 to 10% by weight, more preferably 0.5 to 7% by weight, still more preferably 0.5 to 5% by weight. By controlling the content of units of the monomer having an epoxy group within these ranges above, the resulting cross-linked rubber can have a better balance between strength and elongation. In particular, by controlling the content of units of the monomer having an epoxy group to not less than the lower limit described above, cross-linking can be sufficiently performed, and the resulting cross-linked rubber can easily maintain the shape. In contrast, by controlling the content of units of the monomer having an epoxy group to not more than the upper limit described above, the resulting cross-linked rubber can have an increased elongation and a reduced compression set.

Examples of monomers having a halogen atom include, but should not be limited to, unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, and the like.

Specific examples of unsaturated alcohol esters of halogen-containing saturated carboxylic acids include vinyl chloroacetate, vinyl 2-chloropropionate, allyl chloroacetate, and the like.

Specific examples of haloalkyl (meth)acrylates include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate, and the like.

Specific examples of haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of halogen-containing unsaturated ethers include chloromethyl vinyl ether, 2-chloroethyl vinyl ether, 3-chloropropyl vinyl ether, 2-chloroethyl allyl ether, 3-chloropropyl allyl ether, and the like.

Specific examples of halogen-containing unsaturated ketones include 2-chloroethyl vinyl ketone, 3-chloropropyl vinyl ketone, 2-chloroethyl allyl ketone, and the like.

Specific examples of halomethyl group-containing aromatic vinyl compounds include p-chloromethylstyrene, m-chloromethylstyrene, o-chloromethylstyrene, p-chloromethyl-α-methylstyrene, and the like.

Specific examples of halogen-containing unsaturated amides include N-chloromethyl-(meth)acrylamide and the like.

Specific examples of haloacetyl group-containing unsaturated monomers include 3-(hydroxychloroacetoxy)propyl allyl ether, p-vinylbenzyl chloroacetic acid esters, and the like.

Among these, preferred are unsaturated alcohol esters of halogen-containing saturated carboxylic acids and halogen-containing unsaturated ethers, more preferred are vinyl chloroacetate and 2-chloroethyl vinyl ether, and still more preferred is vinyl chloroacetate. These monomers having a halogen atom can be used alone or in combination.

In the present invention, when the monomer having a halogen atom is used as the cross-linkable monomer, the resulting acrylic rubber can be a halogen atom-containing acrylic rubber.

When the acrylic rubber used in the present invention is a halogen atom-containing acrylic rubber, the content of units of the monomer having a halogen atom is preferably 0.1 to 10% by weight, more preferably 0.5 to 7% by weight, still more preferably 0.5 to 5% by weight. By controlling the content of units of the monomer having a halogen atom within these ranges above, the resulting cross-linked rubber can have a better balance between strength and elongation. In particular, by controlling the content of units of the monomer having a halogen atom to not less than the lower limit described above, cross-linking can be sufficiently performed, and the resulting cross-linked rubber can easily maintain the shape. In contrast, by controlling the content of units of the monomer having a halogen atom to not more than the upper limit described above, the resulting cross-linked rubber can have an increased elongation and a reduced compression set.

In the present invention, use of the α,β-ethylenically unsaturated carboxylic acid monomer and the monomer having a halogen atom as the cross-linkable monomers can provide an acrylic rubber containing a carboxyl group and a halogen atom as the acrylic rubber.

When the acrylic rubber used in the present invention is an acrylic rubber containing a carboxyl group and a halogen atom, specific examples thereof as the cross-linkable monomer include the same cross-linkable monomers as those for the carboxyl group-containing acrylic rubber and the halogen atom-containing acrylic rubber described above. Among these, preferred is use of methacrylic acid in combination with p-chloromethylstyrene.

When the acrylic rubber used in the present invention is an acrylic rubber containing a carboxyl group and a halogen atom, the total content of units of the α,β-ethylenically unsaturated carboxylic acid monomer and units of the monomer having a halogen atom is preferably 0.1 to 10% by weight, more preferably 0.5 to 7% by weight, still more preferably 0.5 to 5% by weight. By controlling the total content of units of the α,β-ethylenically unsaturated carboxylic acid monomer and units of the monomer having a halogen atom to not less than the lower limit described above, cross-linking can be sufficiently performed, and the resulting cross-linked rubber can easily maintain the shape. In contrast, by controlling the total content of units of the α,β-ethylenically unsaturated carboxylic acid monomer and units of the monomer having a halogen atom to not more than the upper limit described above, the resulting cross-linked rubber can have an increased elongation and a reduced compression set.

The ratio between the contents of units of the α,β-ethylenically unsaturated carboxylic acid monomer and units of the monomer having a halogen atom in a weight ratio of units of the α,β-ethylenically unsaturated carboxylic acid monomer to units of the monomer having a halogen atom is preferably 1:1.5 to 1:10, more preferably 1:2 to 1:8.

Examples of diene monomers include conjugated diene monomers and non-conjugated diene monomers.

Specific examples of conjugated diene monomers include 1,3-butadiene, isoprene, piperylene, and the like.

Specific examples of non-conjugated diene monomers include ethylidene norbornene, dicyclopentadiene, dicyclopentadienyl (meth)acrylate, 2-dicyclopentadienylethyl (meth)acrylate, and the like.

These α,β-ethylenically unsaturated carboxylic acid monomers, monomers having an epoxy group, monomers having a halogen atom, and diene monomers can be used alone or in combination.

When the acrylic rubber used in the present invention is the carboxyl group-containing acrylic rubber, the epoxy group-containing acrylic rubber, the halogen atom-containing acrylic rubber, or the acrylic rubber containing a carboxyl group and a halogen atom, it may optionally have different cross-linkable monomer units. Cross-linkable monomers forming different cross-linkable monomer units can be used alone or in combination. In the acrylic rubber used in the present invention, the content of different cross-linkable monomer units is preferably 0 to 9.9% by weight, more preferably 0 to 6.5% by weight, still more preferably 0 to 4.5% by weight, particularly preferably 0 to 4% by weight (to be noted, the total amount of all cross-linkable monomer units in the acrylic rubber is preferably 0.1 to 10% by weight, more preferably 0.5 to 7% by weight, still more preferably 0.5 to 5% by weight, particularly preferably 1 to 5% by weight). By controlling the content of different cross-linkable monomer units to not more than the upper limit described above, the resulting cross-linked rubber can have an increased elongation and a reduced compression set.

In addition to the (meth)acrylic acid ester monomer units and cross-linkable monomer units, the acrylic rubber used in the present invention may optionally have units of a different monomer copolymerizable with the (meth)acrylic acid ester monomer and the cross-linkable monomer.

Examples of different copolymerizable monomers include, but should not be limited to, aromatic vinyl monomers, α,β-ethylenically unsaturated nitrile monomers, monomers having two or more acryloyloxy groups (hereinafter, referred to as "polyfunctional acrylic monomer" in some cases), olefin monomers, vinyl ether compounds, and the like.

Specific examples of aromatic vinyl monomers include styrene, α-methylstyrene, divinylbenzene, and the like.

Specific examples of α,β-ethylenically unsaturated nitrile monomers include acrylonitrile, methacrylonitrile, and the like.

Specific examples of polyfunctional acrylic monomers include ethylene glycol di(meth)acrylate, propylene glycol di(meth)acrylate, and the like.

Specific examples of olefin monomers include ethylene, propylene, 1-butene, 1-octene, and the like.

Specific examples of vinyl ether compounds include vinyl acetate, ethyl vinyl ether, n-butyl vinyl ether, and the like.

Among these, preferred are styrene, acrylonitrile, methacrylonitrile, ethylene, and vinyl acetate, and more preferred are acrylonitrile, methacrylonitrile, ethylene, and vinyl acetate.

These different copolymerizable monomers can be used alone or in combination.

The content of units of the different monomer in the acrylic rubber is preferably 0 to 50% by weight, more preferably 0 to 49.9% by weight, still more preferably 0 to 39.5% by weight, particularly preferably 0 to 29.5% by weight.

The acrylic rubber used in the present invention can be prepared by polymerizing the monomers above. The form of polymerization can be any one of emulsion polymerization, suspension polymerization, bulk polymerization, and solution polymerization. Preferred is emulsion polymerization because the polymerization reaction is easily controlled.

Emulsion polymerization may be performed by any one of a batchwise method, a semi-batchwise method, and a continuous method. The polymerization is performed in the temperature range of usually 0 to 70°C, preferably 5 to 50°C.

The acrylic rubber used in the present invention has a weight average molecular weight (Mw) of preferably 50,000 to 5,000,000, more preferably 100,000 to 4,000,000, still more preferably 150,000 to 3,500,000, although not particularly limited thereto. The weight average molecular weight of the acrylic rubber can be measured by gel permeation chromatography as a value against polystyrene standards, for example.

The acrylic rubber used in the present invention thus prepared has a Mooney viscosity (ML1+4, 100°C) (polymer Mooney) of preferably 10 to 80, more preferably 20 to 70, still more preferably 25 to 60.

In the present invention, these acrylic rubbers thus prepared can be used alone or in combination.

In the present invention, an acrylic rubber comprising 0.1 to 100% by weight of an ethylene-acrylate rubber may be used as the acrylic rubber thus prepared.

When the acrylic rubber comprising 0.1 to 100% by weight of an ethylene-acrylate rubber is used as the acrylic rubber, the proportion of the ethylene-acrylate rubber to the acrylic rubber other than the ethylene-acrylate rubber, i.e., "ethylene-acrylate rubber:acrylic rubber other than ethylene-acrylate rubber" is usually 0.1 to 100% by weight:99.9 to 0% by weight, preferably 10 to 100% by weight:90 to 0% by weight, more preferably 20 to 100% by weight:80 to 0% by weight. Control of the content of the ethylene-acrylate rubber within these ranges above results in an acrylic rubber having high processability and thus a cross-linked rubber having high mechanical properties such as strength and high heat resistance.

The ethylene-acrylate rubber is preferably a polymer containing 50 to 99.9% by weight of (meth)acrylic acid ester monomer units as the main component, 0.1 to 50% by weight of ethylene monomer units, and 0 to 10% by weight of cross-linkable monomer units in the molecule.

For the acrylic rubber other than the ethylene-acrylate rubber, a polymer containing 50 to 100% by weight of the (meth)acrylic acid ester monomer units as the main component and 0 to 10% by weight of the cross-linkable monomer units described above, or the like can be used.

Examples of (meth)acrylic acid ester monomers forming (meth)acrylic acid ester monomer units suitable for the main components of the ethylene-acrylate rubber include, but should not be limited to, the alkyl (meth)acrylate monomers and the alkoxyalkyl (meth)acrylate monomers described above, and the like.

The content of (meth)acrylic acid ester monomer units in the ethylene-acrylate rubber is preferably 50 to 99.9% by weight, more preferably 59.5 to 99% by weight, still more preferably 69 to 98% by weight. By controlling the content of (meth)acrylic acid ester monomer units to not less than the lower limit above, the resulting cross-linked rubber can have improved weatherability, heat resistance, and oil resistance.

In the ethylene-acrylate rubber, the (meth)acrylic acid ester monomer units preferably comprise 30 to 100% by weight of alkyl (meth)acrylate monomer units and 70 to 0% by weight of alkoxyalkyl (meth)acrylate monomer units.

The ethylene-acrylate rubber used in the present invention contains ethylene monomer units as the essential component, and the content of ethylene monomer units is preferably 0.1 to 50% by weight, more preferably 0.5 to 40% by weight, still more preferably 1 to 30% by weight. By controlling the content of ethylene monomer units within these ranges above, the resulting cross-linked rubber has high mechanical properties such as strength, high weatherability, high heat resistance, and high oil resistance.

The ethylene-acrylate rubber may contain cross-linkable monomer units in addition to the (meth)acrylic acid ester monomer units and the ethylene monomer units. Examples of the cross-linkable monomer units include those listed above. The content of cross-linkable monomer units in the ethylene-acrylate rubber is preferably 0 to 10% by weight, more preferably 0.5 to 7% by weight, still more preferably 1 to 5% by weight. By controlling of the content of cross-linkable monomer units to not more than the upper limit above, the resulting cross-linked rubber can have an increased elongation and a reduced compression set.

Among the cross-linkable monomers described above, an α,β-ethylenically unsaturated carboxylic acid monomer is preferably used as the cross-linkable monomer forming part of the monomer units of the ethylene-acrylate rubber and the acrylic rubber other than the ethylene-acrylate rubber because the resulting ethylene-acrylate rubber used in the present invention can be a carboxyl group-containing ethylene-acrylate rubber having carboxyl groups as cross-linking points, and thereby the acrylic rubber used in the present invention can have improved heat aging resistance.

The ethylene-acrylate rubber used in the present invention may optionally contain units of a different monomer copolymerizable with the (meth)acrylic acid ester monomer, ethylene, and the cross-linkable monomer in addition to the (meth)acrylic acid ester monomer units, the ethylene monomer units, and the cross-linkable monomer units. Examples of the different copolymerizable monomer include those listed above. The content of the units of the different monomer in the ethylene-acrylic rubber used in the present invention is preferably 0 to 49.9% by weight, more preferably 0 to 39.5% by weight, still more preferably 0 to 29% by weight.

The ethylene-acrylate rubber constituting the acrylic rubber used in the present invention can be prepared by polymerizing the monomers described above. The form of polymerization can be any one of emulsion polymerization, suspension polymerization, bulk polymerization, and solution polymerization as described above. In other words, any polymerization method can be selected.

When the acrylic rubber used in the present invention contains the ethylene-acrylate rubber and the acrylic rubber other than the ethylene-acrylate rubber, the acrylic rubber used in the present invention can be prepared by mixing the ethylene-acrylate rubber prepared by the above-mentioned method with the acrylic rubber other than the ethylene-acrylate rubber by a known method. Any mixing method can be used without limitation. Suitable is a method of obtaining the respective acrylic rubbers in isolated forms, and then dry blending these.

### <Compound represented by General Formula (1)>

The acrylic rubber composition according to the present invention comprises the above-mentioned acrylic rubber compounded with a compound represented by General Formula (1): 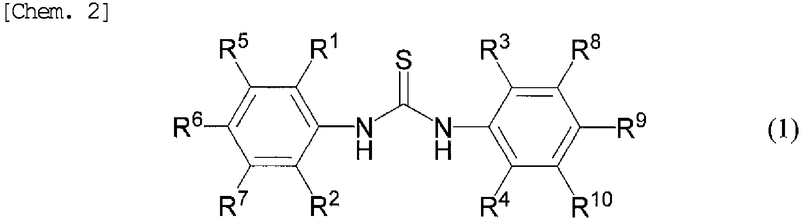 where R¹ to R⁴ each independently represent a C₁ to C₃₀ organic group which may have a substituent, and R⁵ to R¹⁰ each independently represent a hydrogen atom or a C₁ to C₃₀ organic group which may have a substituent.

In the present invention, by compounding the compound represented by General Formula (1) with the acrylic rubber, thermal degradation can be prevented even under a high temperature environment (for example, under an environment at 190°C or more). In particular, the acrylic rubber may gelate under a high temperature environment (for example, under an environment at 190°C or more), and such gelation may cause thermal degradation. In the present invention, thermal degradation caused by gelation can be effectively suppressed by compounding the compound represented by General Formula (1).

In General Formula (1), R¹ to R⁴ each independently represent a C₁ to C₃₀ organic group which may have a substituent, preferably a C₁ to C₃₀ aliphatic hydrocarbon or aromatic heterocyclic group which may have a substituent or a C₆ to C₃₀ aromatic hydrocarbon group which may have a substituent, more preferably a linear, branched, or cyclic C₁ to C₃₀ alkyl group which may have a substituent.

Examples of the C₁ to C₃₀ organic group which may have a substituent, the group forming R¹ to R⁴, include aliphatic hydrocarbon groups which may have a substituent, such as a methyl group, an ethyl group, an n-propyl group, an isopropyl group, an n-butyl group, an isobutyl group, an sec-butyl group, a t-butyl group, an n-pentyl group, an isopentyl group, a neopentyl group, a cyclopentyl group, an n-hexyl group, an isohexyl group, a cyclohexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, and an n-icosyl group; aromatic hydrocarbon groups which may have a substituent, such as a phenyl group, a tolyl group, a methoxyphenyl group, a fluorophenyl group, a chlorophenyl group, a bromophenyl group, an iodophenyl group, a trifluoromethylphenyl group, a naphthyl group, and a furyl group; aromatic heterocyclic groups which may have a substituent, such as a pyridyl group and a thienyl group; and the like. Among these, preferred are linear, branched, or cyclic C₁ to C₃₀ alkyl groups which may have a substituent, more preferred are a methyl group, an ethyl group, an n-propyl group, an isopropyl group, an n-butyl group, an isobutyl group, a sec-butyl group, a t-butyl group, an n-pentyl group, an isopentyl group, a neopentyl group, a cyclopentyl group, an n-hexyl group, an isohexyl group, a cyclohexyl group, and a phenyl group, still more preferred are a methyl group, an ethyl group, a propyl group, an isopropyl group, a butyl group, and a t-butyl group, and particularly preferred are a methyl group and an isopropyl group.

When the organic group has a substituent, examples of the substituent include halogen atoms such as fluorine and chlorine atoms; a cyano group; C₂ to C₁₂ N,N-dialkylamino groups such as a dimethylamino group; C₁ to C₂₀ alkoxy groups such as a methoxy group, an ethoxy group, an isopropoxy group, and a butoxy group; C₁ to C₁₂ alkoxy groups substituted by a C₁ to C₁₂ alkoxy group, such as a methoxymethoxy group and a methoxyethoxy group; a nitro group; C₆ to C₂₀ aromatic hydrocarbon ring groups such as a phenyl group and a naphthyl group; C₂ to C₂₀ aromatic heterocyclic groups such as a triazolyl group, a pyrrolyl group, a furanyl group, a thienyl group, a thiazolyl group, and a benzothiazol-2-ylthio group; C₃ to C₈ cycloalkyl groups such as a cyclopropyl group, a cyclopentyl group, and a cyclohexyl group; C₃ to C₈ cycloalkyloxy groups such as a cyclopentyloxy group and a cyclohexyloxy group; C₂ to C₁₂ cyclic ether groups such as a tetrahydrofuranyl group, a tetrahydropyranyl group, a dioxolanyl group, a dioxanyl group; C₆ to C₁₄ aryloxy groups such as a phenoxy group and a naphthoxy group; C₁ to C₁₂ fluoroalkyl groups having one or more hydrogen atoms substituted by a fluorine atom, such as a trifluoromethyl group, a pentafluoroethyl group, and -CH₂CF₃; a benzofuryl group; a benzopyranyl group; a benzodioxolyl group; a benzodioxanyl group; and the like.

When the organic group forming R¹ to R⁴ has a substituent, the carbon atoms of the substituent are not counted as the carbon atoms of organic group. In other words, the number of carbon atoms of the organic group forming R¹ to R⁴ may be in the range of 1 to 30 excluding the carbon atoms of the substituent. For example, when the organic group forming R¹ to R⁴ is a methoxyethyl group, the organic group has two carbon atoms. In other words, because the methoxy group is a substituent in this case, the number of carbon atoms of the organic group corresponds to that excluding the carbon atom of the methoxy group as the substituent.

In General Formula (1), R⁵ to R¹⁰ each independently represent a hydrogen atom or a C₁ to C₃₀ organic group which may have a substituent, preferably a hydrogen atom, a C₁ to C₃₀ aliphatic hydrocarbon or aromatic heterocyclic group which may have a substituent, or a C₆ to C₃₀ aromatic hydrocarbon group which may have a substituent, more preferably a hydrogen atom, and particularly preferably, all R⁵ to R¹⁰ are hydrogen atoms.

Examples of the C₁ to C₃₀ organic group which may have a substituent, the group forming R⁵ to R¹⁰, include a methyl group, an ethyl group, an n-propyl group, an isopropyl group, an n-butyl group, an isobutyl group, a sec-butyl group, a t-butyl group, an n-pentyl group, an isopentyl group, a neopentyl group, a cyclopentyl group, an n-hexyl group, an isohexyl group, a cyclohexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-icosyl group, a phenyl group, a tolyl group, a methoxyphenyl group, a fluorophenyl group, a chlorophenyl group, a bromophenyl group, an iodophenyl group, a trifluoromethylphenyl group, a naphthyl group, a furyl group, a pyridyl group, a thienyl group, and the like. Among these, preferred are a methyl group, an ethyl group, an isopropyl group, a t-butyl group, and a phenyl group, and more preferred is a methyl group.

When the organic group for R⁵ to R¹⁰ has a substituent, examples of the substituent contained in the organic group for R⁵ to R¹⁰ include the same as those listed as the substituents contained in the organic group in R¹ to R⁴.

Examples of the compound represented by General Formula (1) include N,N'-bis(2,6-dimethylphenyl)thiourea, N,N'-bis(2,4,6-trimethylphenyl) thiourea, N,N'-bis(2,6-diethylphenyl)thiourea, N,N'-bis(2,4,6-triethylphenyl)thiourea, N,N'-bis(2,6-diisopropylphenyl) thiourea, N,N'-bis(2,4,6-triisopropylphenyl)thiourea, N,N'-bis(2-ethyl-6-methylphenyl)thiourea, N,N'-bis(2-methyl-6-isopropylphenyl) thiourea, N,N'-bis(2,6-di-t-butylphenyl)thiourea, N-(2,6-dimethylphenyl)-N'-(2,4,6-trimethylphenyl)thiourea, N-(2,6-dimethylphenyl)-N'-(2-ethyl-6-methylphenyl)thiourea, N-(2,6-diethylphenyl)-N'-(2,6-dimethylphenyl)thiourea, N-(2,6-diethylphenyl)-N'-(2-ethyl-6-methylphenyl)thiourea, N-(2,6-dimethylphenyl)-N'-(2-methyl-6-isopropylphenyl) thiourea, N-(2-ethyl-6-methylphenyl)-N'-(2-methyl-6-isopropylphenyl) thiourea, N-(2,6-diethylphenyl)-N'-(2-methyl-6-isopropylphenyl) thiourea, N-(2-ethyl-6-methylphenyl)-N'-(2,4,6-trimethylphenyl) thiourea, N-(2,6-dimethylphenyl)-N'-(2,6-diisopropylphenyl) thiourea, N-(2,6-diethylphenyl)-N'-(2,4,6-trimethylphenyl) thiourea, N-(2,6-diethylphenyl)-N'-(2,6-diisopropylphenyl) thiourea, N-(2-methyl-6-isopropylphenyl)-N'-(2,4,6-trimethylphenyl) thiourea, N-(2,6-diisopropylphenyl)-N'-(2,4,6-trimethylphenyl) thiourea, N-(2,6-di-t-butylphenyl)-N'-(2,6-dimethylphenyl) thiourea, N-(2,6-di-t-butylphenyl)-N'-(2,6-diethylphenyl) thiourea, N-(2,6-di-t-butylphenyl)-N'-(2,6-diisopropylphenyl) thiourea, and N-(2,6-di-t-butylphenyl)-N'-(2,4,6-trimethylphenyl) thiourea. Among these, preferred for use are N,N'-bis(2,6-dimethylphenyl) thiourea, N,N'-bis(2,4,6-trimethylphenyl)thiourea, N,N'-bis(2,6-diethylphenyl)thiourea, N,N'-bis(2,4,6-triethylphenyl)thiourea, N,N'-bis(2,6-diisopropylphenyl)thiourea, N,N'-bis(2,4,6-triisopropylphenyl)thiourea, N,N'-bis(2-ethyl-6-methylphenyl)thiourea, N,N'-bis(2-methyl-6-isopropylphenyl)thiourea, and N,N'-bis(2,6-di-t-butylphenyl) thiourea. Among these, more preferred for use are N,N'-bis(2,6-dimethylphenyl)thiourea, N,N'-bis(2,4,6-trimethylphenyl)thiourea, N,N'-bis(2,6-diisopropylphenyl)thiourea, and N,N'-bis(2-methyl-6-isopropylphenyl) thiourea, and particularly preferred for use are N,N'-bis(2,6-dimethylphenyl)thiourea and N,N'-bis(2,6-diisopropylphenyl)thiourea.

The compound represented by General Formula (1) can be prepared by a known production method. For example, the compound can be synthesized by the reaction process disclosed in Japanese Patent No. 5682575.

In the acrylic rubber composition according to the present invention, the content of the compound represented by General Formula (1) is preferably 0.1 to 50 parts by weight, more preferably 1 to 10 parts by weight, still more preferably 2 to 5 parts by weight relative to 100 parts by weight of the acrylic rubber. When the content of the compound represented by General Formula (1) falls within these ranges above, thermal degradation of the acrylic rubber composition when heated to a temperature of 190°C or more can be more appropriately prevented.

### <Other components>

In addition to the compound represented by General Formula (1), the acrylic rubber composition according to the present invention may further comprise an additional antioxidant other than the compound represented by General Formula (1). Examples of the additional antioxidant to be used include, but should not be limited to, phenol antioxidants such as monophenol antioxidants such as 2,6-di-t-butyl-p-cresol, 2,6-di-t-butyl-4-ethylphenol, 2,6-di-t-butyl-4-methylphenol, 2,6-di-t-butyl-4-sec-butylphenol, 2-(1-methylcyclohexyl)-4,6-dimethylphenol, 2,6-di-t-butyl-α-dimethylamino-p-cresol, 2,4-bis[(octylthio)methyl]-o-cresol, styrenated phenol, and alkylated phenols; bis-, tris-, or polyphenol antioxidants such as 2,2'-methylenebis(4-methyl-6-t-butylphenol), 2,2'-methylenebis(4-ethyl-6-t-butylphenol), 4,4'-methylenebis(2,6-di-t-butylphenol), 2,2'-methylenebis(6-α-methylbenzyl-p-cresol), methylene-cross-linked polyvalent alkylphenols, 4,4'-butylidenebis(6-t-butyl-m-cresol), 4,4'-butylidenebis(3-methyl-6-t-butylphenol), 2,2'-ethylidenebis(4,6-di-t-butylphenol), 1,1-bis-(4-hydroxyphenyl)cyclohexane, 2,2'-dihydroxy-3,3'-(α-methylcyclohexyl)-5,5'-dimethyldiphenylmethane, alkylated bisphenols, butylated reaction products of p-cresol and dicyclopentadiene, 2,5-di-t-butylhydroquinone, and 2,5-di-t-amylhydroquinone; thiobisphenol antioxidants such as 4,4'-thiobis (6-t-butyl-m-cresol), 4,4'-thiobis(6-t-butyl-o-cresol), 4,4'-thiobis(3-methyl-6-t-butylphenol), and bis(3,5-di-t-butyl-4-hydroxybenzyl) sulfide; aromatic secondary amine compounds such as phenyl-α-naphthylamine, octylated diphenylamine, 4,4'-bis(α,α-dimethylbenzyl) diphenylamine, p-(p-toluenesulfonylamide)diphenylamine, p-isopropoxydiphenylamine, bis(phenylisopropylidene)-4,4-diphenylamine, N,N'-diphenylethylenediamine, N,N'-diphenylpropylenediamine, N,N'-diphenyl-p-phenylenediamine, N-isopropyl-N'-phenyl-p-phenylenediamine, N,N'-di-2-naphthyl-p-phenyldiamine, N-cyclohexyl-N'-phenyl-p-phenylenediamine, N-phenyl-N'-(3-methacryloyloxy-2-hydroxy propyl)-p-phenylenediamine, N,N'-bis(l-methylheptyl)-p-phenylenediamine, N,N-bis(1,4-dimethylpentyl)-p-phenylenediamine, 4-(α-phenylethyl) diphenylamine, 4,4'-bis(α-phenylethyl)diphenylamine, and 4,4'-bis(4-methylphenyl)sulfonyl)diphenylamine; nickel dialkyldithiocarbamates such as nickel dimethyldithiocarbamate, nickel diethyldithiocarbamate, and nickel dibutyldithiocarbamate; and the like.

Besides the compounds listed above, other examples of the additional antioxidant to be used include compounds represented by General Formulae (2a) and (2b): 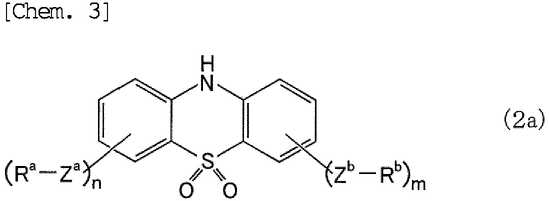 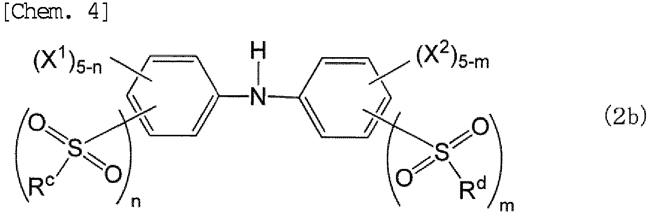 wherein in General Formula (2a), R^{a} and R^{b} each independently represent a C₁ to C₃₀ organic group which may have a substituent; Z^{a} and Z^{b} each independently represent a chemical single bond or -SO₂-; n and m each independently represent 0 or 1, and at least one of n and m is 1; and in General Formula (2b), R^{c} and R^{d} each independently represent a C₁ to C₃₀ organic group which may have a substituent; X¹ and X² each independently represent a hydrogen atom, a halogen atom, a C₁ to C₁₀ alkyl group which may have a substituent, a cyano group, a nitro group, -OR, -O-C(=O)-R, - C(=O)-OR, -O-C(=O)-OR, NRR'-, -NR-C(=O)-R', -C(=O)-NRR', or -O-C(=O)-NRR', where R and R' each independently represent a hydrogen atom or a C₁ to C₂₀ organic group which may have a substituent, and a plurality of X¹s and a plurality of X²s can be each independently different substituents; n and m each independently represent 0 or 1, and at least one of n and m is 1.

In General Formula (2a), R^{a} and R^{b} each independently represent a C₁ to C₃₀ organic group which may have a substituent.

Examples of the C₁ to C₃₀ organic group forming R^{a} and R^{b} include, but should not be limited to, C₁ to C₃₀ alkyl groups such as a methyl group, an ethyl group, an n-propyl group, an isopropyl group, an n-butyl group, an isobutyl group, a sec-butyl group, a t-butyl group, an n-pentyl group, an n-hexyl group, an n-heptyl group, an n-octyl group, an n-nonyl group, and an n-decyl group; C₃ to C₃₀ cycloalkyl groups such as a cyclopropyl group, a cyclopentyl group, a cyclohexyl group, a cycloheptyl group, and a cyclooctyl group; C₆ to C₃₀ aryl groups such as a phenyl group, a biphenyl group, a naphthyl group, and an anthranil group; C₁ to C₃₀ alkoxy groups such as a methoxy group, an ethoxy group, an n-propoxy group, an isopropoxy group, an n-butoxy group, an isobutoxy group, a sec-butoxy group, a t-butoxy group, an n-pentyloxy group, and an n-hexyloxy group; and the like.

The above-mentioned organic group forming R^{a} and R^{b} may have a substituent at any position.

When the organic group is an alkyl group, examples of the substituent include halogen atoms such as fluorine, chlorine, and bromine atoms; C₁ to C₁₀ alkoxy groups such as a methoxy group, an ethoxy group, and an isopropoxy group; a nitro group; a cyano group; substituted or unsubstituted phenyl groups, such as a phenyl group, a 4-methylphenyl group, and a 2-chlorophenyl group; and the like.

When the organic group is a cycloalkyl group or an aryl group, examples of the substituent include halogen atoms such as fluorine, chlorine, and bromine atoms; C₁ to C₁₀ alkoxy groups such as a methoxy group, an ethoxy group, and an isopropoxy group; a nitro group; a cyano group; C₁ to C₁₀ alkyl groups such as a methyl group, an ethyl group, and a t-butyl group; and the like.

Furthermore, when the organic group is an alkoxy group, examples of the substituent include halogen atoms such as fluorine, chlorine, and bromine atoms; a nitro group; a cyano group; and the like.

In General Formula (2a), when the organic group forming R^{a} and R^{b} has a substituent, the carbon atoms of the substituent are not counted as the carbon atoms of the organic group.

R^{a} and R^{b} each independently are preferably a C₂ to C₂₀ alkyl group which may have a substituent or a C₆ to C₃₀ aryl group which may have a substituent, more preferably a linear or branched C₂ to C₂₀ alkyl group which may have a substituent, a phenyl group which may have a substituent, or a naphthyl group which may have a substituent, still more preferably a linear or branched C₂ to C₈ alkyl group which may have a substituent or a phenyl group which may have a substituent, particularly preferably a linear or branched C₂ to C₈ alkyl group which may have a substituent. Examples of substituents for these include the same as those listed as the substituents when the organic group is a C₁ to C₃₀ alkyl group which may have a substituent and a C₆ to C₃₀ aryl group which may have a substituent.

Preferred specific examples of such an organic group forming R^{a} and R^{b} include an α-methylbenzyl group, an α,α-dimethylbenzyl group, a t-butyl group, a phenyl group, or a 4-methylphenyl group. Among these, preferred is an α,α-dimethylbenzyl group or a 4-methylphenyl group, and still more preferred is an α,α-dimethylbenzyl group. R^{a} and R^{b} can each be independent.

In General Formula (2a), Z^{a} and Z^{b} each independently represent a chemical single bond or -SO₂-, and are preferably a chemical single bond.

Furthermore, in General Formula (2a), n and m each independently represent 0 or 1, and at least one of n and m is 1. To be noted, n and m all are preferably 1.

In the present invention, the compound represented by General Formula (2a) is preferably any one of compounds represented by General Formulae (3) to (5): 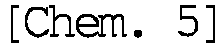 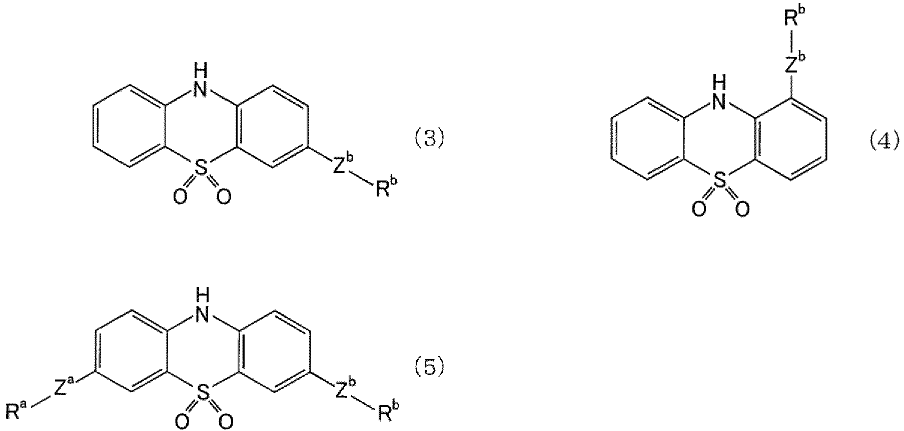 wherein, in General Formulae (3) to (5), R^{a}, R^{b}, Z^{a}, and Z^{b} are as defined in General Formula (2a).

Among these compounds represented by General Formulae (3) to (5), preferred are compounds represented by General Formulae (3) and (5), and more preferred is a compound represented by General Formula (5).

In General Formulae (3) to (5), -Z^{a}-R^{a} and -Z^{b}-R^{b} each independently are preferably an α-methylbenzyl group, an α,α-dimethylbenzyl group, a t-butyl group, a phenylsulfonyl group, or a 4-methylphenylsulfonyl group, more preferably an α,α-dimethylbenzyl group or a 4-methylphenylsulfonyl group, still more preferably an α,α-dimethylbenzyl group.

In other words, in the present invention, in General Formula (2a), it is preferred that R^{a} and R^{b} each independently be a linear or branched C₂ to C₈ alkyl group which may have a substituent, Z^{a} and Z^{b} be a chemical single bond, and n and m be 1.

The compound represented by General Formula (2a) can be prepared as follows: A phenothiazine compound serving as a precursor is prepared by a known method of preparing a phenothiazine compound, and then is oxidized.

Specifically, the compound represented by General Formula (2a) can be prepared using a compound (phenothiazine) represented by General Formula (6) as a starting raw material by introducing the substituent(s) (-Z^{a}-R^{a}, -Z^{b}-R^{b}) to the 1-, 3-, 6- and/or 8-position of the phenothiazine ring in General Formula (6) by the reaction process according to WO 2011/093443 A1 Publication, followed by oxidization to convert the S atom in the phenothiazine ring to -SO₂-.

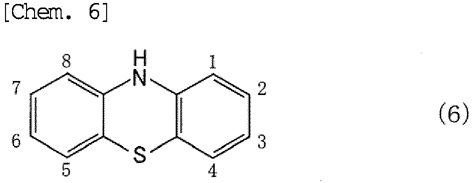

In General Formula (2b), R^{c} and R^{d} each independently represent a C₁ to C₃₀ organic group which may have a substituent, and are preferably a C₁ to C₃₀ aromatic or cyclic aliphatic group which may have a substituent.

Examples of C₁ to C₃₀ aromatic group include, but should not be limited to, aromatic hydrocarbon groups such as a phenyl group, a biphenyl group, a naphthyl group, a phenanthryl group, and an anthranil group; and aromatic heterocyclic groups such as a furyl group, a pyrrolyl group, a thienyl group, a pyridyl group, and a thiazolyl group.

Examples of C₁ to C₃₀ cyclic aliphatic group include, but should not be limited to, a cyclopropyl group, a cyclobutyl group, a cyclopentyl group, a cyclohexyl group, and the like. Among these, R^{c} and R^{d} each independently are preferably a phenyl group and a 4-methylphenyl group.

The above-mentioned organic group forming R^{c} and R^{d} may have a substituent at any position. Examples of such a substituent include halogen atoms such as fluorine, chlorine, and bromine atoms; C₁ to C₁₀ alkoxy groups such as a methoxy group, an ethoxy group, and an isopropoxy group; a nitro group; a cyano group; C₁ to C₁₀ alkyl groups such as a methyl group, an ethyl group, and a t-butyl group; and the like.

When the organic group forming R^{c} and R^{d} in General Formula (2b) has a substituent, the carbon atoms of the substituent are not counted as the carbon atoms of the organic group.

In General Formula (2b), X¹ and X² each independently represent a C₁ to C₁₀ alkyl group which may have a substituent such as a hydrogen atom, a halogen atom, a methyl group, an ethyl group, an n-propyl group, an isopropyl group, an n-butyl group, an isobutyl group, a sec-butyl group, a t-butyl group, an n-pentyl group, an n-hexyl group, an n-heptyl group, an n-octyl group, an n-nonyl group, or an n-decyl group, a cyano group, a nitro group, -OR, -O-C(=O)-R, -C(=O)-OR, -O-C(=O)-OR, NRR'-, -NR-C(=O)-R', -C(=O)-NRR', or -O-C(=O)-NRR'. Here, R and R' each independently represent a hydrogen atom or a C₁ to C₂₀ organic group which may have a substituent, and a plurality of X¹s and a plurality of X²s all can be independently different substituents. Preferably, X¹ and X² all are a hydrogen atom.

Examples of the substituent for the C₁ to C₁₀ alkyl group for X¹ and X² which may have a substituent include the same as those listed as the substituents for the C₁ to C₃₀ alkyl group which may have a substituent in R^{a} and R^{b}.

In the present invention, the compound represented by General Formula (2b) is preferably selected from the compounds where R^{c} and R^{d} each independently represent an aromatic or cyclic aliphatic C₁ to C₃₀ group which may have a substituent, X¹ and X² represent a hydrogen atom, and n and m represent 1, and is more preferably a compound represented by General Formula (2c): 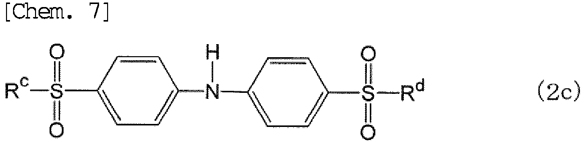 wherein R^{c} and R^{d} are as defined in General Formula (2b).

The compound represented by General Formula (2b) can be prepared by a known production method. The compound can be synthesized by the reaction process according to WO 2011/058918 A1 Publication, for example.

As an additional antioxidant, a compound represented by the following General Formula (7) can be used as well as the above-mentioned compounds and the compounds represented by General Formulae (2a) and (2b):

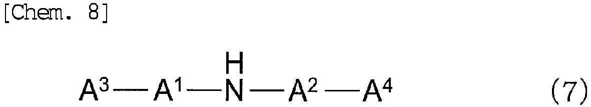

In General Formula (7), A¹ and A² each independently represent a C₆ to C₁₈ arylene group which may have a substituent, and A³ and A⁴ each independently represent an organic group having a cyclic imide structure which may have a substituent.

In General Formula (7), A¹ and A² each independently represent a C₆ to C₁₈ arylene group which may have a substituent, preferably a C₆ to C₁₀ arylene group which may have a substituent, more preferably a phenylene group which may have a substituent, still more preferably a 1,4-phenylene group. Particularly preferably, A¹ and A² both are a 1,4-phenylene group because a better antioxidant effect is ensured. Examples of the substituent include halogen atoms such as fluorine, chlorine, and bromine atoms; C₁ to C₁₀ alkoxy groups such as a methoxy group, an ethoxy group, and an isopropoxy group; a nitro group; a cyano group; C₁ to C₁₀ alkyl groups such as a methyl group, an ethyl group, a t-butyl group; and the like.

In General Formula (7), A³ and A⁴ each independently represent an organic group having a cyclic imide structure which may have a substituent, and are preferably an organic group represented by General Formula (8) or (9):

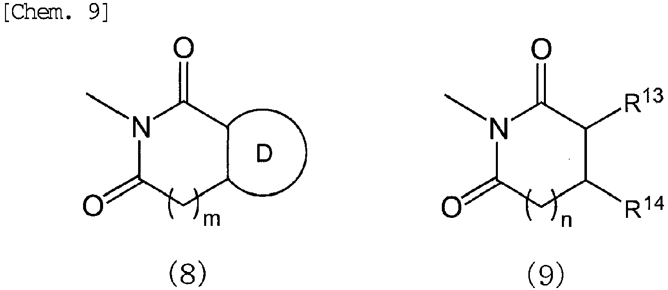

In General Formula (8), D represents a C₆ to C₁₈ ring which may have a substituent, preferably a C₆ to C₁₀ ring which may have a substituent; and D may be monocyclic or may be polycyclic. In this case, examples of the substituent include C₁ to C₃₀ alkyl groups, C₁ to C₃₀ alkenyl groups, -O-R¹¹, -O-C(=O)-R¹¹, -C(=O)-O-R¹¹, -C(=O)-NR¹¹(R¹²), -NR¹¹-C(=O)-R¹², -CN, -SR¹¹, -S-(-O)-R¹¹, -S(=O)₂-R¹¹, and the like. R¹¹ and R¹² each represent a C₁ to C₃₀ alkyl group, a C₁ to C₃₀ alkenyl group, or a C₆ to C₁₂ aromatic group. Moreover, m represents 0 or 1, and is preferably 0.

In General Formula (9), R¹³ and R¹⁴ each independently represent a hydrogen atom, a C₁ to C₃₀ alkyl group which may have a substituent, or a C₁ to C₃₀ alkenyl group which may have a substituent, and are preferably a hydrogen atom or a C₁ to C₂₀ alkyl group which may have a substituent, more preferably a hydrogen atom or a C₁ to C₁₀ alkyl group which may have a substituent. In this case, examples of the substituent include halogen atoms such as fluorine, chlorine, and bromine atoms; C₁ to C₁₀ alkoxy groups such as a methoxy group, an ethoxy group, and an isopropoxy group; a nitro group; a cyano group; substituted or unsubstituted phenyl groups, such as a phenyl group, 4-methylphenyl group, and a 2-chlorophenyl group; and the like. Moreover, n represents 0 or 1, and is preferably 0.

Among these organic groups forming A³ and A⁴, the organic groups being represented by General Formula (8) or (9), preferred is any one of organic groups represented by General Formulae (10) to (15) to attain a better antioxidant effect:

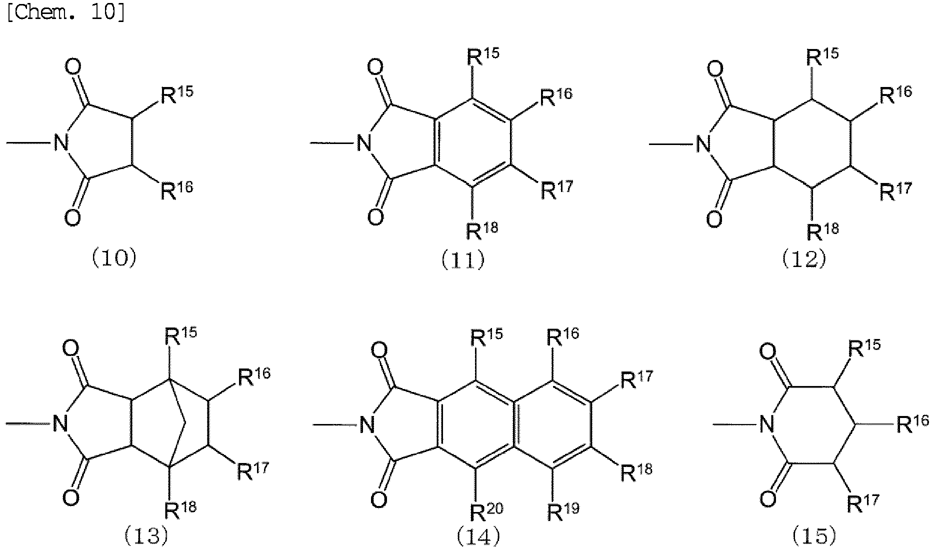

In General Formulae (10) to (15), R¹⁵ to R²⁰ each independently represent a hydrogen atom, a C₁ to C₃₀ alkyl group, a C₁ to C₃₀ alkenyl group, -O-R²¹, -O-C(=O)-R²¹, -C(=O)-O-R²¹, -C(=O)-NR²¹(R²²), -NR²¹-C(-O)-R²², - CN, -SR²¹, -S-(=O)-R²¹, or -S(=O)₂-R²¹; and R²¹ and R²² each independently represent a C₁ to C₃₀ alkyl group, a C₁ to C₃₀ alkenyl group, or a C₆ to C₁₂ aromatic group. R¹⁵ to R²⁰ each independently are preferably a hydrogen atom or a C₁ to C₃₀ alkyl group, more preferably a hydrogen atom or a C₁ to C₂₀ alkyl group, particularly preferably a hydrogen atom or a C₁ to C₁₀ alkyl group. When two or more R¹⁵s to R²⁰s are present, these may be the same or different.

Among these organic groups represented by General Formulae (10) to (15), preferred is an organic group represented by General Formula (10), (11), (13), or (14), more preferred is an organic group represented by General Formula (10), (11), or (14), and particularly preferred is an organic group represented by General Formula (14) to further enhance the antioxidant effect.

The compound represented by General Formula (7) is preferably any one of compounds represented by General Formulae (16) to (19):

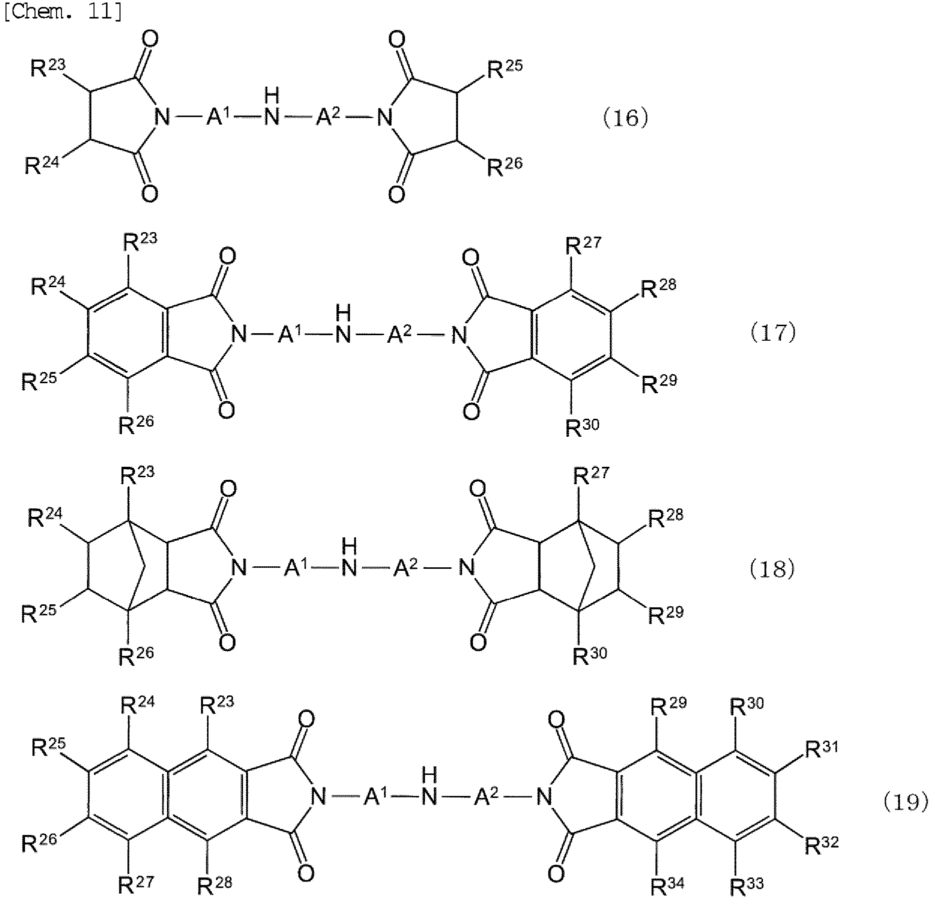

In General Formulae (16) to (19), R²³ to R³⁴ each independently represent a hydrogen atom, a C₁ to C₃₀ alkyl group, a C₁ to C₃₀ alkenyl group, -OR³⁵, -O-C (=O)-R³⁵, -C(=O)-OR³⁵, -C(=O)-NR³⁵(R³⁶), -NR³⁵-C(=O)-R³⁶, -CN, -SR³⁵, -S-(=O)-R³⁵, or -S(=O)₂-R³⁵; and R³⁵ and R³⁶ each independently represent a C₁ to C₃₀ alkyl group, a C₁ to C₃₀ alkenyl group, or a C₆ to C₁₂ aromatic group. R²³ to R³⁴ each independently are preferably a hydrogen atom or a C₁ to C₃₀ alkyl group, more preferably a hydrogen atom or a C₁ to C₂₀ alkyl group, particularly preferably a hydrogen atom or a C₁ to C₁₀ alkyl group. A¹ and A² are as defined as in General Formula (7).

Among these compounds represented by General Formulae (16) to (19), particularly preferred are compounds represented by General Formula (17), which can further enhance the antioxidant effect.

The compound represented by General Formula (7) can be prepared by a known production method. The compound can be synthesized by the reaction process according to WO 2018/159459 A1, for example.

As the additional antioxidant, a compound represented by the following General Formula (20) can be used as well as the above-mentioned compounds and the compounds represented by General Formulae (2a), (2b), and (7):

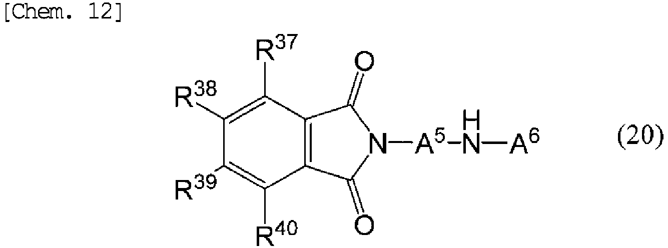

In General Formula (20), A⁵ and A⁶ each independently represent a C₁ to C₃₀ aromatic group which may have a substituent. R³⁷, R³⁹, and R⁴⁰ each independently represent a hydrogen atom, a halogen atom, a C₁ to C₁₀ alkyl group which may have a substituent, a cyano group, a nitro group, - OR^{1a}, -O-C(=O)-R^{1a}, -C(=O)-OR^{1a}, -O-C(=O)-OR^{1a}, -NR^{1b}-C(=O)-R^{1a}, -C(=O)-NR^{1a}R^{1c}, or -O-C(=O)-NR^{1a}R^{1c}. R^{1a} and R^{1c} each independently represent a hydrogen atom or a C₁ to C₃₀ organic group which may have a substituent. R^{1b}s each independently represent a hydrogen atom or a C₁ to C₆ alkyl group. The C₁ to C₃₀ organic group forming R^{1a} and R^{1c} may include at least one linking group selected from the group consisting of -O-, -S-, -O-C(=O)-, -C(=O)-O-, -O-C(=O)-O-, -NR^{1d}-C(=O)-, -C(=O)-NR^{1d}-, -NR^{1d}-, and -C(=O)-, except for the case where a linking group consisting of two or more adjacent -O- or - S- groups is included. R^{1d}s each independently represent a hydrogen atom or a C₁ to C₆ alkyl group.

In General Formula (20), R³⁸ represents a hydrogen atom, a halogen atom, a C₁ to C₁₀ alkyl group which may have a substituent, a cyano group, a nitro group, -O-C(=O)-R^{1e}, -C(=O)-OR^{1e}, -NR^{1e}-C(=O)-R^{1f}, -C(=O)-NR^{1e}R^{1f}, or -O-C(=O)-NR^{1e}R^{1f}. R^{1e} and R^{1f} each independently represent a C₁ to C₃₀ organic group which may have a substituent. The C₁ to C₃₀ organic group forming R^{1e} and R^{1f} may include at least one linking group selected from the group consisting of -O-, -S-, -O-C(=O)-, -C(=O)-O-, -O-C(=O)-O-, -NR^{1d}-C(=O)-, -C(=O)-NR^{1d}-, -NR^{1d}-, and -C(=O)-, except for the case where a linking group consisting of two or more adjacent -O- or -S- groups is included. R^{1d}s each independently represent a hydrogen atom or a C₁ to C₆ alkyl group.

Among the compounds represented by General Formula (20), those according to a preferred aspect can be compounds where A⁵ is a phenylene group which may have a C₁ to C₃₀ substituent, A⁶ is a phenyl group which may have a C₁ to C₃₀ substituent, R³⁷, R³⁹, and R⁴⁰ are a hydrogen atom, R³⁸ is - O-C(=O)-R^{1e}, -C(=O)-OR^{1e}, -NR^{1e}-C(=O)-R^{1f}, -C(=O)-NR^{1e}R^{1f}, or -O-C(=O)-NR^{1e}R^{1f}, R^{1b} is a hydrogen atom or a C₁ to C₆ alkyl group, and R^{1e} and R^{1f} each independently are a C₁ to C₃₀ organic group which may have a substituent.

Among the compounds represented by General Formula (20) according to the preferred aspect, those according to a more preferred aspect can be diarylamine compounds where R³⁸ is -C(=O)-OR^{1e} and R^{1e} is a phenyl group which may have a C₁ to C₁₈ substituent or a naphthyl group which may have a C₁ to C₁₈ substituent in General Formula (20).

Among the compounds represented by General Formula (20) according to the more preferred aspect, those according to a still more preferred aspect can be diarylamine compounds wherein in General Formula (20), R³⁸ is -C(=O)-OR^{1e} where R^{1e} is a C₁ to C₁₀ alkyl group which may have a substituent or a C₄ to C₃₀ aromatic group which may have a substituent, and substituents in R^{1e} each independently represent a halogen atom, a C₁ to C₁₀ alkyl group, a C₁ to C₂₀ aralkyl group, a C₆ to C₃₀ aromatic group, a cyano group, a nitro group, a sulfo group, -OR^{e}, -O-C(=O)-R^{e}, -C (=O) -OR^{e}, -O-C(=O)-OR^{e}, -NR^{g}-C(=O)-R^{e}, -C (=O)-NR^{e}R^{f}, -O-C (=O)-NR^{e}R^{f}, -SR^{e}, -S (=O)-R^{e}, or - S(=O)₂-R^{e} (where R^{e}, R^{f}, and R^{g} each independently represent a hydrogen atom, a C₁ to C₈ alkyl group, or a phenyl group); and A⁵ and A⁶ each independently represent a C₆ to C₃₀ aromatic group which may have a substituent, and the substituent in A⁵ and A⁶ is a C₁ to C₁₀ alkyl group, a C₁ to C₁₀ halogen-substituted alkyl group, a halogen atom, a cyano group, or a nitro group. That is, the compounds are phtalimide group-containing diarylamine compounds having an ester group at the 4-position, which are represented by General Formula (21):

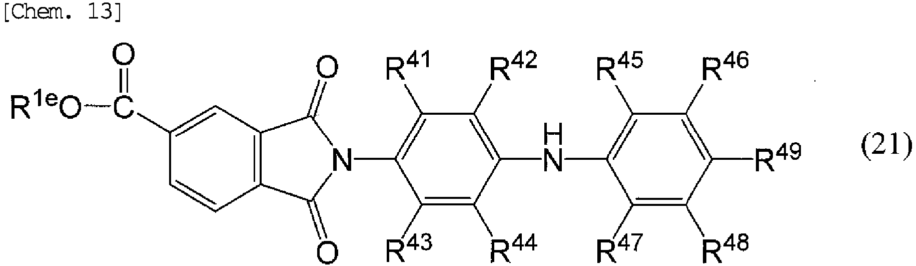

In General Formula (21), R⁴¹ to R⁴⁹ each independently represent a hydrogen atom, a C₁ to C₁₀ alkyl group, a halogen-substituted C₁ to C₁₀ alkyl group, a halogen atom, a cyano group, or a nitro group, and R^{1e} is as defined above.

Furthermore, the diarylamine compound represented by General Formula (20) will be specifically described.

In General Formula (20), R³⁸ is preferably an ester group represented by -C(=O)-OR^{1e} because it facilitates production of the compound. Here, R^{1e} is a C₁ to C₃₀ organic group which may have a substituent, and many aliphatic and aromatic groups such as an alkyl group, a cycloalkyl group, an aryl group, an arylalkyl group, an alkylaryl group, an arylalkylaryl group, and an alkoxy group can be selected for the C₁ to C₃₀ organic group forming R^{1e}. From the viewpoint of heat resistance, aromatic groups, particularly a phenyl group or a naphthyl group is preferably selected.

Furthermore, when in General Formula (20), R³⁸ is -C(-O)-OR^{1e} where R^{1e} is a C₁ to C₂₀ aromatic group which may have a substituent, use of such a compound as an antioxidant is particularly preferred because it ensures a higher heat resistance improving effect. Most preferably, R³⁸ is an ester structure represented by -C(-O)-OR^{1e} where R^{1e} is a phenyl group which may have a C₁ to C₁₈ substituent or a naphthyl group which may have a C₁ to C₁₈ substituent, because it ensures a much higher heat resistance improving effect.

The compound represented by General Formula (20) can be prepared by a known production method. For example, the compound can be synthesized by the reaction process according to Japanese Patent No. 5732673.

When the additional antioxidant is used, the total content of the compound represented by General Formula (1) and the additional antioxidant in the acrylic rubber composition according to the present invention is preferably 0.1 to 50 parts by weight, more preferably 1 to 10 parts by weight, still more preferably 3 to 6 parts by weight relative to 100 parts by weight of the acrylic rubber.

The content of the additional antioxidant in the acrylic rubber composition according to the present invention is preferably 0.1 to 10 parts by weight, more preferably 0.3 to 5 parts by weight, still more preferably 0.5 to 2.5 parts by weight relative to 100 parts by weight of the acrylic rubber.

The acrylic rubber composition according to the present invention may further comprise a cross-linking agent. The acrylic rubber composition according to the present invention can be made cross-linkable (cross-linkable acrylic rubber composition) by the cross-linking agent contained therein, and can be formed into a cross-linked rubber by cross-linking with heat or the like.

Any cross-linking agent can be used without limitation, and cross-linking agents known in the related art can be used: for example, polyvalent amine compounds such as diamine compounds and carbonates thereof; sulfur; sulfur donors; triazinethiol compounds; ammonium salts of organic carboxylic acids; metal salts of dithiocarbamic acid; polyvalent carboxylic acids; quaternary onium salts; imidazole compounds; isocyanuric acid compounds; organic peroxides; and the like. For example, the cross-linking agent may be appropriately selected depending on the presence/absence of cross-linkable monomer units of the acrylic rubber or the type of cross-linkable monomer units. These cross-linking agents can be used alone or in combination.

Preferred examples of polyvalent amine compounds and carbonates thereof include, but should not be limited to, C₄ to C₃₀ polyvalent amine compounds and carbonates thereof. Examples of such polyvalent amine compounds and carbonates thereof include aliphatic polyvalent amine compounds and carbonates thereof, aromatic polyvalent amine compounds, and the like. On the other hand, compounds having a non-conjugated nitrogen-carbon double bond, such as guanidine compounds, are excluded.

Examples of aliphatic polyvalent amine compounds and carbonates thereof include, but should not be limited to, hexamethylenediamine, hexamethylenediamine carbamate, N,N'-dicinnamylidene-1,6-hexanediamine, and the like. Among these, preferred is hexamethylenediamine carbamate.

Examples of aromatic polyvalent amine compound include, but should not be limited to, 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, and the like. Among these, preferred is 2,2'-bis[4-(4-aminophenoxy)phenyl]propane.

Examples of sulfur donors include dipentamethylene thiuram hexasulfide, triethylthiuram disulfide, and the like.

Examples of triazinethiol compounds include 1,3,5-triazine-2,4,6-trithiol, 6-anilino-1,3,5-triazine-2,4-dithiol, 6-dibutylamino-1,3,5-triazine-2,4-dithiol, 6-diallylamino-1,3,5-triazine-2,4-dithiol, 6-octylamino-1,3,5-triazine-2,4-dithiol, and the like. Among these, preferred is 1,3,5-triazine-2,4,6-trithiol.

Examples of ammonium salts of carboxylic acids include ammonium benzoate, ammonium adipate, and the like.

Examples of metal salts of dithiocarbamic acid include zinc dimethyldithiocarbamate, and the like

Examples of polyvalent carboxylic acids include tetradecanedioic acid, and the like.

Examples of quaternary onium salts include cetyltrimethylammonium bromide, and the like.

Examples of imidazole compounds include 2-methylimidazole, and the like.

Examples of isocyanuric acid compounds include ammonium isocyanurate, and the like.

The amount of the cross-linking agent to be compounded with the acrylic rubber composition according to the present invention is preferably 0.05 to 20 parts by weight, more preferably 0.1 to 15 parts by weight, still more preferably 0.3 to 12 parts by weight relative to 100 parts by weight of the acrylic rubber. A content of the cross-linking agent within these ranges above can ensure sufficient cross-linking, resulting in a cross-linked rubber having high mechanical properties.

Besides the components described above, the acrylic rubber composition according to the present invention can contain compounding agents usually used in the rubber processing field. Examples of such compounding agents include reinforcing fillers such as carbon black and silica; non-reinforcing fillers such as calcium carbonate and clay; cross-linking accelerators; photostabilizers; plasticizers; processing aids; lubricants; tackifiers; lubricating agents; flame retardants; antifungal agents; antistatic agents; colorants; silane coupling agents; cross-linking retarders; and the like. The amounts of these compounding agents are not particularly limited in the range not inhibiting the purpose and effect of the present invention, and these compounding agents can be compounded in appropriate amounts.

### <Method of preparing acrylic rubber composition>

The acrylic rubber composition according to the present invention can be prepared by any method, and suitable is a method of mixing the acrylic rubber and the compound represented by General Formula (1) with compounding agents optionally added.

Examples of the mixing method include, but should not be limited to, kneading methods using a kneading machine such as a roll, an intermix, a kneader, a Banbury mixer, or a screw mixer. Mixing of these materials may be performed in a solvent.

When the cross-linking agent is compounded, the components excluding the cross-linking agent, a thermally unstable cross-linking aid, and the like are kneaded with a mixer such as a Banbury mixer, a Brabender mixer, an intermixer, or a kneader. The kneaded product is transferred to a roll or the like, the cross-linking agent, the thermally unstable cross-linking aid, and the like are added to perform secondary kneading. Thus, the acrylic rubber composition according to the present invention can be prepared.

As described above, the acrylic rubber composition according to the present invention can be given. The acrylic rubber composition according to the present invention comprises the acrylic rubber and the compound represented by General Formula (1). By compounding the compound represented by General Formula (1), thermal degradation of the acrylic rubber composition according to the present invention when heated to a temperature of 190°C or more can be effectively suppressed.

Moreover, when the cross-linking agent is compounded with the acrylic rubber composition according to the present invention, a cross-linked rubber can be given by cross-linking the resulting acrylic rubber composition.

The cross-linked rubber is produced by forming the acrylic rubber composition containing the cross-linking agent and cross-linking the formed acrylic rubber composition. Examples of methods of forming and cross-linking the acrylic rubber composition include, but should not be limited to, a method of extruding the cross-linkable rubber composition into a molded body with a single- or multi-screw extruder, and then cross-linking the molded product by heating; a method of forming the acrylic rubber composition with a metal mold using an injection molding machine, an extrusion blow molding machine, a transfer molding machine, a press molding machine, or the like, and simultaneously cross-linking the acrylic rubber composition by heat during the forming; and the like. Among these methods, preferred are methods using an extruder or an injection molding machine, and particularly preferred are those using an extruder. Forming and cross-linking may be simultaneously performed, or cross-linking may be performed after forming, and the timings thereof may be selected depending on the forming method, the vulcanization method, the size of the molded body, and the like.

The forming temperature during forming and cross-linking of the acrylic rubber composition is preferably 15 to 220°C, more preferably 20 to 200°C. The cross-linking temperature is preferably 100°C or more, more preferably 120°C to 250°C. The cross-linking time may be arbitrarily selected in the range of 1 minute to 5 hours. As the heating method, a method usually used in cross-linking of the rubber may be appropriately selected, for example, electric heating, steam heating, oven heating, ultra high frequency (UHF) heating, hot air heating, and the like.

Depending on the shape, the size, and the like thereof, the inside of the cross-linked rubber may not be sufficiently cross-linked even when the surface thereof is cross-linked. For this reason, the cross-linked rubber may be further heated for secondary cross-linking. When secondary cross-linking is performed, the heating temperature is preferably 100 to 220°C, more preferably 130 to 210°C, and the heating time is preferably 30 minutes to 10 hours, more preferably 1 to 5 hours.

Because the cross-linked rubber thus obtained is produced using the acrylic rubber composition according to the present invention, thermal degradation of the cross-linked rubber when heated to 190°C or more can be effectively suppressed as in the acrylic rubber composition according to the present invention. For this reason, utilizing the properties, the cross-linked rubber thus obtained is suitably used as a variety of seals such as O-rings, packings, diaphragms, oil seals, shaft seals, bearing seals, mechanical seals, wellhead seals, seals for electrical and electronic devices, and seals for pneumatic apparatuses and devices; a variety of gaskets such as a cylinder head gasket attached to a connection between a cylinder block and a cylinder head, a rocker cover gasket attached to a connection between a rocker cover and a cylinder head, an oil pan gasket attached to a connection between an oil pan and a cylinder block or a transmission case, a gasket for fuel cell separators attached between a pair of housings which sandwich a unit cell including a positive electrode, an electrolyte plate, and a negative electrode, and a gasket for top covers for hard disk drives; a variety of belts; a variety of hoses such as fuel hoses, turbo air hoses, oil hoses, radiator hoses, heater hoses, water hoses, vacuum brake hoses, control hoses, air conditioner hoses, brake hoses, power steering hoses, air hoses, marine hoses, risers, and flow lines; a variety of boots such as CVJ boots, propeller shaft boots, constant-velocity joint boots, and rack and pinion boots; damping material rubber parts such as cushion materials, dynamic dampers, rubber couplings, air springs, and vibration insulators; and the like.

### EXAMPLES

Hereinafter, the present invention will be specifically described based on Examples, but these Examples should not be construed as limitations to the present invention. In the description below, "parts" is weight-based unless otherwise specified. The physical properties were measured as follows.

### [Dissolution ratio and swelling degree]

A film of an acrylic rubber composition was heated in the air at 190°C for 336 hours to give a film of the acrylic rubber composition after heating.

The resulting film of the acrylic rubber composition after heating was immersed in toluene for 24 hours under room temperature to swell the film. The swollen film was separated from toluene, and the weight of the swollen film was measured.

In the next step, the swollen film was dried with a vacuum dryer at 35°C for 15 hours, and the weight of the film after vacuum drying was measured. The dissolution ratio of the film of the acrylic rubber composition was calculated from the following expression. When the cross-linking reaction is allowed to proceed by heating, it is presumed that the progress of the cross-linking reaction causes the growth of a three-dimensional structure, providing an insoluble component. Thus, it can be determined that a higher dissolution ratio indicates that thermal degradation, specifically, increase in hardness, which is caused by progress of the cross-linking reaction by heating, is further suppressed. dissolution ratio (%) = {(weight of film after heating) - (weight of film after swelling and vacuum drying)}/(weight of film after heating) × 100

From the following expression, the swelling degree of the film of the acrylic rubber composition was calculated. When the cross-linking reaction is allowed to proceed by heating, cross-linking points are increased due to the progress of the cross-linking reaction, and generally, the swelling degree of an acrylic rubber composition in an organic solvent is reduced as cross-linking points are increased. Thus, it can be determined that a higher swelling degree indicates that thermal degradation, specifically, increase in hardness, which is caused by progress of the cross-linking reaction by heating, is further suppressed. swelling degree (%) = (weight of swollen film)/(weight of film after swelling and vacuum drying) × 100

### [Synthetic Example 1]

80 ml of water, 60.5 g (0.5 mol) of 2,6-dimethylaniline, and 25.3 g (0.25 mol) of triethylamine were placed into a 4-necked flask having a volume of 300 ml and including a stirrer, a thermometer, a cooling condenser, and a hydrogen sulfide gas absorber which was connected to an upper portion of the cooling condenser with a gas introduction pipe and contained a sodium hydroxide aqueous solution. Thereafter, while the inner temperature was being kept at 20 to 30°C, 22.8 g (0.3 mol) of carbon disulfide was added dropwise over 1 hour. After the addition was completed, post-stirring was performed for 2 hours under the same temperature, and further, the inner temperature was raised to 80 to 90°C. While the temperature was being kept, stirring was performed until generation of hydrogen sulfide gas was completed. Thus, the reaction was completed. The hydrogen sulfide gas generated during the reaction was recovered with the absorber disposed external to the system. After the reaction was completed, the inner temperature was lowered to about 15°C. The reaction product was separated with filtration, washed with water and a small amount of toluene, and dried to yield 62.5 g of white crystals of N,N'-bis(2,6-dimethylphenyl)thiourea (yield: 88.0%) represented by the following formula (22) (compound represented by General Formula (1) where R¹, R², R³, and R⁴ = methyl group, and R⁵, R⁶, R⁷, R⁸, R⁹, and R¹⁰ = H).

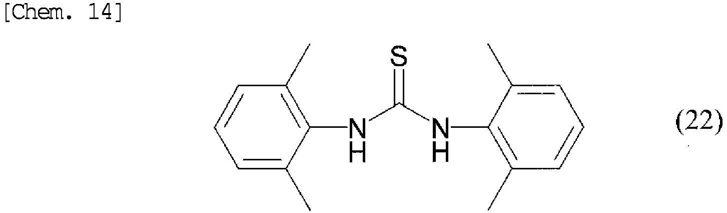

### [Synthetic Example 2]

90.2 g of N,N'-bis(2,6-diisopropylphenyl)thiourea represented by the following formula (23) (compound represented by General Formula (1) where R¹, R², R³, and R⁴= isopropyl group, and R⁵, R⁶, R⁷, R⁸, R⁹, and R¹⁰ = H) was prepared (yield: 90.0%) in the same manner as in Synthetic Example 1 except that 60.5 g of 2,6-dimethylaniline was replaced by 88.5 g (0.5 mol) of 2,6-diisopropylaniline.

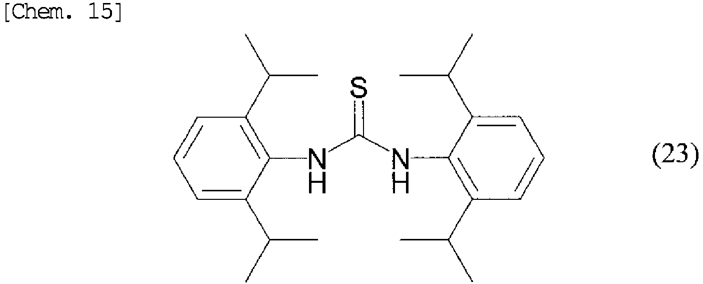

### [Synthetic Example 3]

An antioxidant x represented by the following formula (24) was synthesized by the following method:

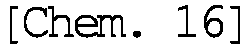

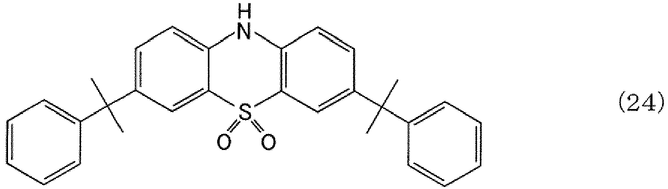

Specifically, first, 50.0 g (250.92 mmol) of phenothiazine was added to a 3-necked reactor provided with a thermometer in a nitrogen stream, and was dissolved in 200 ml of toluene. In the next step, 59.31 g (501.83 mmol) of α-methylstyrene and 1.19 g (6.27 mmol) of p-toluenesulfonic acid monohydrate were added to this solution and reacted at 80°C for 1 hour. Subsequently, the reaction solution was lowered to room temperature, and 48 ml of acetic acid and 85.34 g (752.7 mmol) of a 30% hydrogen peroxide solution were added and further reacted at 80°C for 2 hours. The reaction solution was lowered to room temperature, and then 630 ml of methanol was added. Deposited crystals were then filtered, and was rinsed with 320 ml of methanol to give 85.7 g of white crystals of an antioxidant represented by the formula (24) with a yield of 73%.

### [Example 1]

4 g of a carboxyl group-containing acrylic rubber (product name "Hytemp AR212HR", available from ZEON Corporation), 95.6 mg (2.4 parts relative to 100 parts of the carboxyl group-containing acrylic rubber, 8.4 mmol) of N,N'-bis(2,6-dimethylphenyl)thiourea prepared in Synthetic Example 1, and 40.0 mg (1 part relative to 100 parts of the carboxyl group-containing acrylic rubber, 2.1 mmol) of the antioxidant x (Formula (24)) prepared in Synthetic Example 3 were dissolved in 36 g of THF to prepare a solution. This solution was poured into a petri dish made of a fluorinated resin and having a diameter of 10 cm, was air dried for 15 hours, and then was vacuum dried for 4 hours with a 30°C vacuum dryer to prepare a film of the acrylic rubber composition. The resulting film was cut into a 1.5-cm square, and was heated at 190°C for 336 hours by the above method, followed by calculation of the dissolution ratio and the swelling degree. The results are shown in Table 1.

### [Example 2]

An acrylic rubber composition was prepared as in Example 1 except that 95.6 mg of N,N'-bis(2,6-dimethylphenyl)thiourea was replaced by 132.7 mg (3.3 parts relative to 100 parts of the carboxyl group-containing acrylic rubber, 8.4 mmol) of N,N'-bis(2,6-diisopropylphenyl)thiourea prepared in Synthetic Example 2, and a film of the acrylic rubber composition was prepared as in Example 1. The resulting film of the acrylic rubber composition was evaluated as above. The results are shown in Table 1.

### [Comparative Example 1]

An acrylic rubber composition was prepared as in Example 1 except that N,N'-bis(2,6-dimethylphenyl)thiourea was not used, and a film of the acrylic rubber composition was prepared as in Example 1. The resulting film of the acrylic rubber composition was evaluated as above. The results are shown in Table 1.

### [Comparative Example 2]

An acrylic rubber composition was prepared as in Example 1 except that 95.6 mg of N,N'-bis(2,6-dimethylphenyl)thiourea was replaced by 76.3 mg (1.9 parts relative to 100 parts of the carboxyl group-containing acrylic rubber, 8.4 mmol) of diphenylthiourea, and a film of the acrylic rubber composition was prepared as in Example 1. The resulting film of the acrylic rubber composition was evaluated as above. The results are shown in Table 1.

### [Table 1]

**Table 1**

| | Compound represented by General Formula (1) | | | Additional antioxidant | Dissolution ratio [%] of acrylic rubber composition after heated at 190°C for 336h | Swelling degree [%] of acrylic rubber composition after heated at 190°C for 336h |
|---|---|---|---|---|---|---|
| | Name | Parts [parts by weight] compounded relative to 100 parts of acrylic rubber | Amount [mmol] compounded relative to 100 parts of acrylic rubber | Parts [parts by weight] compounded relative to 100 parts of acrylic rubber | | |
| Example 1 | N,N'-Bis(2,6-dimethylphenyl)thiourea (compound represented by General Formula (1) where R¹, R², R³, R⁴ = methyl group, R⁵, R⁶, R⁷, R⁸, R⁹, R¹⁰ = H) | 2.4 | 8.4 | 1.0 | 30 | 1500 |
| Example 2 | N,N'-Bis(2,6-diisopropylphenyl)thiourea (compound repreented by General Formula (1) where R¹, R², R³, R⁴ = isopropyl group, R⁵, R⁶, R⁷, R⁸, R⁹, R¹⁰ = H) | 3.3 | 8.4 | 1.0 | 33 | 1910 |
| Comparative Example 1 | None | - | - | 1.0 | 24 | 810 |
| Comparative Example 2 | Diphenylthiourea | 1.9 | 8.4 | 1.0 | 20 | 980 |

Table 1 shows that the acrylic rubber compositions comprising the acrylic rubber compounded with a thiourea compound having a specific structure exhibited a high dissolution ratio and a high swelling degree after heating at 190°C for 336 hours, and thermal degradation (particularly, thermal degradation caused by occurrence of gelation) was appropriately suppressed (Examples 1 and 2). From these results, it can be concluded that thermal degradation of the cross-linked rubbers prepared from the acrylic rubber compositions according to the present invention can also be appropriately suppressed.

In contrast, when the thiourea compound having a specific structure was not compounded, the resulting acrylic rubber composition exhibited a low dissolution ratio and a low swelling degree after heating at 190°C for 336 hours, and was remarkably thermally degraded (Comparative Example 1).

When a thiourea compound other than the thiourea compound having a specific structure was compounded, the resulting acrylic rubber composition exhibited a low dissolution ratio and a low swelling degree after heating at 190°C for 336 hours, and was remarkably thermally degraded (Comparative Example 2).

## Claims

1. An acrylic rubber composition comprising an acrylic rubber and a compound represented by General Formula (1): 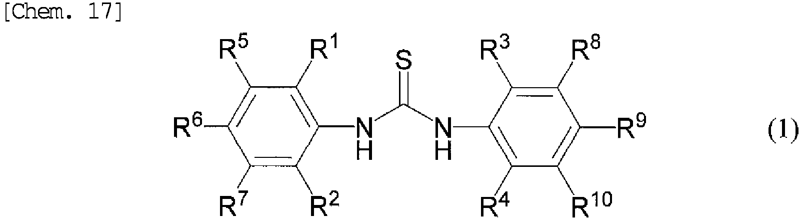 where R¹ to R⁴ each independently represent a C₁ to C₃₀ organic group which may have a substituent, and R⁵ to R¹⁰ each independently represent a hydrogen atom or a C₁ to C₃₀ organic group which may have a substituent.

2. The acrylic rubber composition according to claim 1, wherein R¹ to R⁴ in the compound represented by General Formula (1) each independently represent a C₁ to C₃₀ aliphatic hydrocarbon, a C₁ to C₃₀ aromatic heterocyclic group, or a C₆ to C₃₀ aromatic hydrocarbon group which may have a substituent.

3. The acrylic rubber composition according to claim 2, wherein R¹ to R⁴ in the compound represented by General Formula (1) each independently represent a linear, branched, or cyclic C₁ to C₃₀ alkyl group which may have a substituent.

4. The acrylic rubber composition according to any one of claims 1 to 3, wherein the content of the compound represented by General Formula (1) is 0.1 to 50 parts by weight relative to 100 parts by weight of the acrylic rubber.

5. The acrylic rubber composition according to claim 4, wherein the content of the compound represented by General Formula (1) is 1 to 10 parts by weight relative to 100 parts by weight of the acrylic rubber.

6. The acrylic rubber composition according to any one of claims 1 to 5, wherein the acrylic rubber is a carboxyl group-containing acrylic rubber.

7. The acrylic rubber composition according to any one of claims 1 to 5, wherein the acrylic rubber is an epoxy group-containing acrylic rubber.

8. The acrylic rubber composition according to any one of claims 1 to 5, wherein the acrylic rubber is a halogen atom-containing acrylic rubber.

9. The acrylic rubber composition according to any one of claims 1 to 5, wherein the acrylic rubber is an acrylic rubber containing a carboxyl group and a halogen atom.

10. The acrylic rubber composition according to any one of claims 1 to 9, wherein the acrylic rubber comprises 0.1 to 100% by weight of an ethylene-acrylate rubber.

11. The acrylic rubber composition according to any one of claims 1 to 10, further comprising an antioxidant other than the compound represented by General Formula (1), wherein the total content of the compound represented by General Formula (1) and the antioxidant is 0.1 to 50 parts by weight relative to 100 parts by weight of the acrylic rubber.

12. The acrylic rubber composition according to any one of claims 1 to 11, further comprising 0.05 to 20 parts by weight of a cross-linking agent relative to 100 parts by weight of the acrylic rubber.

13. A cross-linked rubber prepared by cross-linking the acrylic rubber composition according to claim 12.

14. The cross-linked rubber according to claim 13, wherein the cross-linked rubber is an extrusion molded article.

15. The cross-linked rubber according to claim 13, wherein the cross-linked rubber is a seal member.

## Patentansprüche

1. Acrylkautschukzusammensetzung, umfassend einen Acrylkautschuk und eine Verbindung der allgemeinen Formel (1): 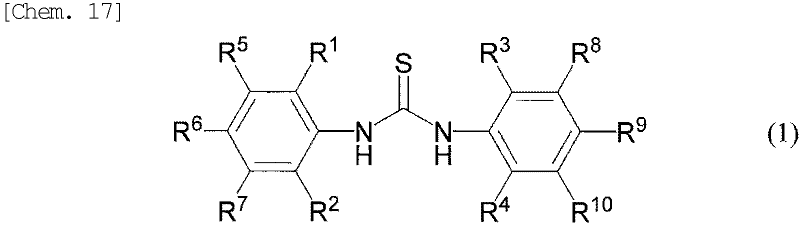 worin R¹ bis R⁴ jeweils unabhängig voneinander eine organische C₁- bis C₃₀-Gruppe darstellen, die einen Substituenten haben kann, und R⁵ bis R¹⁰ jeweils unabhängig voneinander ein Wasserstoffatom oder eine organische C₁- bis C₃₀-Gruppe darstellen, die einen Substituenten haben kann.

2. Acrylkautschukzusammensetzung nach Anspruch 1, wobei R¹ bis R⁴ in der durch die allgemeine Formel (1) dargestellten Verbindung jeweils unabhängig voneinander einen aliphatischen C₁- bis C₃₀-Kohlenwasserstoff, eine aromatische heterocyclische C₁- bis C₃₀-Gruppe oder eine aromatische C₆- bis C₃₀-Kohlenwasserstoffgruppe darstellen, die einen Substituenten aufweisen kann.

3. Acrylkautschukzusammensetzung nach Anspruch 2, wobei R¹ bis R⁴ in der durch die allgemeine Formel (1) dargestellten Verbindung jeweils unabhängig voneinander eine lineare, verzweigte oder cyclische C₁- bis C₃₀-Alkylgruppe darstellen, die einen Substituenten aufweisen kann.

4. Acrylkautschukzusammensetzung nach einem der Ansprüche 1 bis 3, wobei der Gehalt an der durch die allgemeine Formel (1) dargestellten Verbindung 0,1 bis 50 Gewichtsteile, bezogen auf 100 Gewichtsteile des Acrylkautschuks, beträgt.

5. Acrylkautschukzusammensetzung nach Anspruch 4, wobei der Gehalt an der durch die allgemeine Formel (1) dargestellten Verbindung 1 bis 10 Gewichtsteile, bezogen auf 100 Gewichtsteile des Acrylkautschuks, beträgt.

6. Acrylkautschukzusammensetzung nach einem der Ansprüche 1 bis 5, wobei der Acrylkautschuk ein Carboxylgruppen-haltiger Acrylkautschuk ist.

7. Acrylkautschukzusammensetzung nach einem der Ansprüche 1 bis 5, wobei der Acrylkautschuk ein Epoxidgruppen-haltiger Acrylkautschuk ist.

8. Acrylkautschukzusammensetzung nach einem der Ansprüche 1 bis 5, wobei der Acrylkautschuk ein Halogenatom-haltiger Acrylkautschuk ist.

9. Acrylkautschukzusammensetzung nach einem der Ansprüche 1 bis 5, wobei der Acrylkautschuk ein Acrylkautschuk ist, der eine Carboxylgruppe und ein Halogenatom enthält.

10. Acrylkautschukzusammensetzung nach einem der Ansprüche 1 bis 9, wobei der Acrylkautschuk 0,1 bis 100 Gew.-% eines Ethylen-Acrylat-Kautschuks umfasst.

11. Acrylkautschukzusammensetzung nach einem der Ansprüche 1 bis 10, die ferner ein anderes Antioxidans als die durch die allgemeine Formel (1) dargestellte Verbindung umfasst, wobei der Gesamtgehalt der durch die allgemeine Formel (1) dargestellten Verbindung und des Antioxidans 0,1 bis 50 Gewichtsteile, bezogen auf 100 Gewichtsteile des Acrylkautschuks, beträgt.

12. Die Acrylkautschukzusammensetzung nach einem der Ansprüche 1 bis 11, die ferner 0,05 bis 20 Gewichtsteile eines Vernetzungsmittels, bezogen auf 100 Gewichtsteile des Acrylkautschuks, enthält.

13. Vernetzter Kautschuk, hergestellt durch Vernetzen der Acrylkautschukzusammensetzung nach Anspruch 12.

14. Vernetzter Kautschuk nach Anspruch 13, wobei der vernetzte Kautschuk ein mittels Extrusion geformter Gegenstand ist.

15. Der vernetzte Kautschuk nach Anspruch 13, wobei der vernetzte Kautschuk ein Dichtungselement ist.

## Revendications

1. Composition de caoutchouc acrylique comprenant un caoutchouc acrylique et un composé représenté par la formule générale (1) : 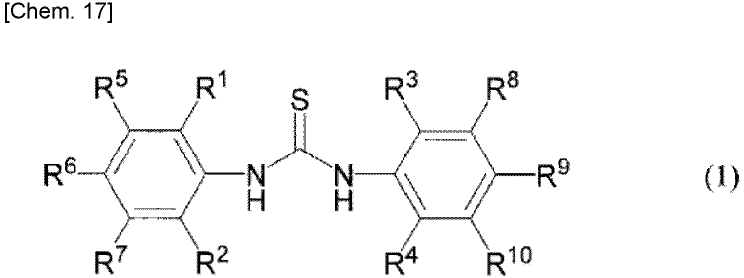 où R¹ à R⁴ représentent chacun indépendamment un groupe organique en C₁ à C₃₀ qui peut être substitué, et R⁵ à R¹⁰ représentent chacun indépendamment un atome d'hydrogène ou un groupe organique en C₁ à C₃₀ qui peut être substitué.

2. Composition de caoutchouc acrylique selon la revendication 1, dans laquelle R¹ à R⁴ du composé représenté par la formule générale (1) représentent chacun indépendamment un hydrocarbure aliphatique en C₁ à C₃₀, un groupe hétérocyclique aromatique en C₁ à C₃₀ ou un groupe hydrocarboné aromatique en C₆ à C₃₀ qui peut comprendre un substituant.

3. Composition de caoutchouc acrylique selon la revendication 2, dans R¹ à R⁴ du composé représenté par la formule générale (1) représentent chacun indépendamment un groupe alkyle en C₁ à C₃₀ linéaire, ramifié ou cyclique qui peut comprendre un substituant.

4. Composition de caoutchouc acrylique selon l'une quelconque des revendications 1 à 3, dans laquelle la teneur en composé représenté par la formule générale (1) est de 0,1 à 50 parties en poids pour 100 parties en poids du caoutchouc acrylique.

5. Composition de caoutchouc acrylique selon la revendication 4, dans laquelle la teneur en composé représenté par la formule générale (1) est de 1 à 10 parties en poids pour 100 parties en poids du caoutchouc acrylique.

6. Composition de caoutchouc acrylique selon l'une quelconque des revendications 1 à 5, dans laquelle le caoutchouc acrylique est un caoutchouc acrylique contenant un groupe carboxyle.

7. Composition de caoutchouc acrylique selon l'une quelconque des revendications 1 à 5, dans laquelle le caoutchouc acrylique est un caoutchouc acrylique contenant un groupe époxy.

8. Composition de caoutchouc acrylique selon l'une quelconque des revendications 1 à 5, dans laquelle le caoutchouc acrylique est un caoutchouc acrylique contenant un atome d'halogène.

9. Composition de caoutchouc acrylique selon l'une quelconque des revendications 1 à 5, dans laquelle le caoutchouc acrylique est un caoutchouc acrylique contenant un groupe carboxyle et un atome d'halogène.

10. Composition de caoutchouc acrylique selon l'une quelconque des revendications 1 à 9, dans laquelle le caoutchouc acrylique comprend de 0,1 à 100 % en poids d'un caoutchouc éthylène-acrylate.

11. Composition de caoutchouc acrylique selon l'une quelconque des revendications 1 à 10, comprenant en outre un antioxydant autre que le composé de formule générale (1), dans laquelle la teneur totale en composé représenté par la formule générale (1) et en antioxydant est de 0,1 à 50 parties en poids pour 100 parties en poids du caoutchouc acrylique.

12. Composition de caoutchouc acrylique selon l'une quelconque des revendications 1 à 11, comprenant en outre de 0,05 à 20 parties en poids d'un agent de réticulation pour 100 parties en poids du caoutchouc acrylique.

13. Caoutchouc réticulé préparé par réticulation de la composition de caoutchouc acrylique selon la revendication 12.

14. Caoutchouc réticulé selon la revendication 13, dans lequel le caoutchouc réticulé est un article moulé par extrusion.

15. Caoutchouc réticulé selon la revendication 13, dans lequel le caoutchouc réticulé est un élément d'étanchéité.
